# EUROPEAN PATENT APPLICATION

(11) **EP 2 259 374 A1**
(43) Date of publication of application: **08.12.2010**
(21) Application number: 09719303.1
(22) Date of filing: 03.02.2009
(51) Int. Cl.: H01M 8/16, H01M 4/90, H01M 8/02

(54) **FUEL CELL AND ELECTRONIC DEVICE**

(30) Priority: 11.03.2008 JP 2008061229
(71) Applicant: Sony Corporation, Tokyo 108-0075 (JP)
(72) Inventor: KUMITA, Hideyuki, Tokyo 108-0075 (JP); GOTO, Yoshio, Tokyo 108-0075 (JP); NAKAGAWA, Takaaki, Tokyo 108-0075 (JP); SAKAI, Hideki, Tokyo 108-0075 (JP); MITA, Hiroki, Tokyo 108-0075 (JP); MATSUMOTO, Ryuhei, Tokyo 108-0075 (JP); TOKITA, Yuichi, Tokyo 108-0075 (JP)
(74) Representative: Müller - Hoffmann & Partner
(86) International application number: PCT/JP2009/051776
(87) International publication number: WO 2009/113340

(57) **Abstract**

A fuel cell having excellent properties is provided in which, when an enzyme is immobilized in at least one of a positive electrode and a negative electrode, a sufficient buffering capability can be provided even in a high power output operation and the inherent capability of the enzyme can be sufficiently exerted. In a biofuel cell including a structure in which a positive electrode 2 and a negative electrode 1 face each other with an electrolyte layer 3 therebetween, the electrolyte layer 3 containing a buffer material, and the biofuel cell including an enzyme immobilized in at least one of the positive electrode 2 and the negative electrode 1, the electrolyte layer 3 contains a compound including an imidazole ring as a buffer material and at least one acid selected from the group consisting of acetic acid, phosphoric acid, and sulfuric acid is further added to the electrolyte layer 3. As the compound including an imidazole ring, imidazole, 1-methylimidazole, 2-methylimidazole, 4-methylimidazole, 2-ethylimidazole, or the like is used.

## Description

### Technical Field

The present invention relates to a fuel cell in which an enzyme is immobilized in at least one of a positive electrode and a negative electrode; and an electronic apparatus employing such a fuel cell.

### Background Art

A fuel cell has a structure in which a positive electrode (oxidant electrode) and a negative electrode (fuel electrode) face each other with an electrolyte (proton conductor) therebetween. In an existing fuel cell, the fuel (hydrogen) supplied to the negative electrode is oxidized to be separated into electrons and protons (H⁺); and the electrons are given to the negative electrode and the H⁺ move through the electrolyte to the positive electrode. In the positive electrode, the H⁺ react with oxygen supplied from the outside and electrons fed from the negative electrode through the external circuit and H₂O is generated.

Thus, a fuel cell is a highly efficient power generator that directly converts the chemical energy of fuel into electrical energy and can extract, as electrical energy at a high conversion efficiency, the chemical energy of fossil energy such as natural gas, petroleum, or coal regardless of point of use or time of use. Accordingly, developments and investigations of fuel cells for applications to large-scale electric power generation and the like have been actively performed. For example, there is an accomplishment in which fuel cells were mounted on a space shuttle and it has been demonstrated that fuel cells can supply both electric power and water for crews and fuel cells are clean power generators.

Furthermore, in recent years, fuel cells having relatively low operation temperature ranges from room temperature to about 90°C such as polymer electrolyte fuel cells have been developed and have been attracting attention. Accordingly, not only the applications to large-scale electric power generation but also applications to driving power supplies of automobiles and small systems such as portable power supplies for personal computers, mobile devices, and the like are being studied.

Thus, fuel cells are being studied in terms of wide applications from large-scale electric power generation to small-scale electric power generation and are attracting much attention as highly efficient power generators. However, fuel cells generally convert fuels such as natural gas, petroleum, and coal with reformers into hydrogen gas and have various problems in that, for example, limited resources are consumed; heating at high temperature is required; and catalysts of expensive noble metals such as platinum (Pt) are required. In addition, when hydrogen gas or methanol is directly used as the fuel, they need to be carefully handled.

Then, biological metabolism performed in living organisms is recognized as a highly efficient energy conversion mechanism and the application thereof to fuel cells has been proposed. Herein, the biological metabolism includes respiration performed within the cells of microorganisms, photosynthesis, and the like. The biological metabolism has advantages in that the efficiency of generating electric power is extremely high and, in addition, the reactions proceed under mild conditions at about room temperature.

For example, respiration is a mechanism in which nutrients such as sugars, fats, and proteins are taken into a microorganism or a cell, the chemical energy of the nutrients is converted into oxidation-reduction energy, that is, electrical energy, by reducing nicotinamide adenine dinucleotide (NAD⁺) into reduced nicotinamide adenine dinucleotide (NADH) in the process of generating carbon dioxide (CO₂) through the glycolysis system and the tricarboxylic acid (TCA) cycle that include many enzyme reaction steps; and, furthermore, in the electron transport system, the electrical energy of these NADHs is directly converted into the electrical energy of a proton gradient and oxygen is reduced to generate water. The resultant electrical energy is used in adenosinetriphosphate (ATP) synthetase to generate ATP from adenosinediphosphate (ADP). The ATP is used for reactions that are required by microorganisms and cells to live and grow. Such energy conversion is performed in cytosol and mitochondrias.

In addition, photosynthesis is a mechanism in which light energy is taken in and, in the process of converting the light energy into electrical energy by reducing nicotinamide adenine dinucleotide phosphate (NADP⁺) into reduced nicotinamide adenine dinucleotide phosphate (NADPH) in the electron transport system, water is oxidized to generate oxygen. This electrical energy is used in the carbon-fixation reaction of CO₂ taken in and is used to synthesize carbohydrates.

As a technique in which the above-described biological metabolism is applied to a fuel cell, a microorganism battery in which electrical energy generated within a microorganism is extracted with an electron mediator to the outside of the microorganism and such electrons are given to an electrode to thereby provide current has been reported (for example, refer to Japanese Unexamined Patent Application Publication No. 2000-133297).

However, since there are many unnecessary reactions other than target reactions for converting chemical energy into electrical energy in microorganisms and cells, in the above-described technique, electrical energy is consumed for unwanted reactions and a sufficient energy conversion efficiency is not achieved.

Accordingly, fuel cells (biofuel cells) in which only desired reactions are performed with enzymes have been proposed (for example, refer to Japanese Unexamined Patent Application Publication Nos. 2003-282124, 2004-71559, 2005-13210, 2005-310613, 2006-24555, 2006-49215, 2006-93090, 2006-127957, and 2006-156354). These biofuel cells are configured to decompose fuels with enzymes into protons and electrons and biofuel cells in which alcohols such as methanol and ethanol and monosaccharides such as glucose are used as fuels have been developed.

In general, in such a biofuel cell, the electrolyte contains a buffer material (buffer solution). This is because, since an enzyme used as a catalyst is very sensitive to the pH of a solution, a buffer material is used to control the pH to be close to a pH at which the enzyme appropriately functions. As the buffer material, sodium dihydrogenphosphate (NaH₂PO₄), 3-(N-morpholino)propanesulfonic acid (MOPS), N-2-hydroxyethylpiperazine-N'-2-ethanesulfonic acid (HEPES), or the like has been used. And, in general, the concentration of such a buffer material has been 0.1 M or less. This is because it has been common that the concentration of a buffer material is decreased as much as possible to the minimum at which pH can be kept constant and is made close to that in the physiological condition by addition of appropriate inorganic ions or organic ions.

However, according to studies by the inventors of the present invention, in the above-described existing biofuel cells employing NaH₂PO₄, MOPS, HEPES, and the like as buffer materials contained in the electrolytes, when a large surface area electrode of porous carbon or the like on which an enzyme is immobilized is used or the power output is increased by increasing the concentration of an enzyme immobilized, the buffering capability is insufficient. Thus, the pH of the electrolyte around the enzyme deviates from the optimum pH and the inherent capability of the enzyme cannot be sufficiently exerted.

Accordingly, an object to be achieved by the present invention is to provide a fuel cell having excellent properties in which, when an enzyme is immobilized in at least one of a positive electrode and a negative electrode, a sufficient buffering capability can be provided even in a high power output operation and the inherent capability of the enzyme can be sufficiently exerted.

Another object to be achieved by the present invention is to provide an electronic apparatus employing such an excellent fuel cell described above.

### Disclosure of Invention

To achieve the above-described object, a first invention provides
a fuel cell including a structure in which a positive electrode and a negative electrode face each other with an electrolyte therebetween, the electrolyte containing a buffer material,
wherein an enzyme is immobilized in at least one of the positive electrode and the negative electrode; and
the buffer material contains a compound including an imidazole ring.

Here, the compound including an imidazole ring is specifically, imidazole, triazole, a pyridine derivative, a bipyridine derivative, an imidazole derivative (histidine, 1-methylimidazole, 2-methylimidazole, 4-methylimidazole, 2-ethylimidazole, ethyl imidazole-2-carboxylate, imidazole-2-carboxyaldehyde, imidazole-4-carboxylic acid, imidazole-4,5-dicarboxylic acid, imidazole-1-yl-acetic acid, 2-acetylbenzimidazole, 1-acetylimidazole, N-acetylimidazole, 2-aminobenzimidazole, N-(3-aminopropyl)imidazole, 5-amino-2-(trifluoromethyl)benzimidazole, 4-azabenzimidazole, 4-aza-2-mercaptobenzimidazole, benzimidazole, 1-benzylimidazole, or 1-butylimidazole), or the like. The concentration of the compound including an imidazole ring may be appropriately selected; however, in view of providing a sufficiently high buffering capability, the concentration is preferably 0.2 M or more and 3 M or less, more preferably 0.2 M or more and 2.5 M or less, and still more preferably 1 M or more and 2.5 M or less. Thus, when the concentration of a buffer material contained in an electrolyte is 0.2 M or more and 3 M or less, which is sufficiently high, even when an increase or a decrease in protons occurs within an electrode, an enzyme-immobilized membrane, or the like due to, for example, an enzyme reaction through protons in a high power output operation, a sufficient buffering action can be provided, deviation of the pH of the electrolyte around the enzyme from the optimum pH can be sufficiently suppressed to a small degree, and the inherent capability of the enzyme can be sufficiently exerted. In general, the pKₐ of a buffer material is 5 or more and 9 or less. The pH of an electrolyte containing a buffer material is preferably about 7; however, the pH may be generally any value of 1 to 14.

If necessary, the buffer material may contain a buffer material other than a compound including an imidazole ring. Specific examples are dihydrogenphosphate ions (H₂PO₄⁻), 2-amino-2-hydroxymethyl-1,3-propanediol (abbreviated name: Tris), 2-(N-morpholino)ethansulfonic acid (MES), cacodylic acid, carbonic acid (H₂CO₃), hydrogen citrate ions, N-(2-acetamide)iminodiacetate (ADA), piperazine-N,N'-bis(2-ethanesulfonic acid) (PIPES), N-(2-acetamide)-2-aminoethanesulfonic acid (ACES), 3-(N-morpholino)propanesulfonic acid (MOPS), N-2-hydroxyethylpiperazine-N'-2-ethanesulfonic acid (HEPES), N-2-hydroxyethylpiperazine-N'-3-propanesulfonic acid (HEPPS), N-[tris(hydroxymethyl)methyl]glycine (abbreviated name: Tricine), glycylglycine, N,N-bis(2-hydroxyethyl)glycine (abbreviated name: Bicine), and the like.

Furthermore, in view of maintaining the enzyme activity at a higher level, it is preferred that, in addition to the above-described buffer material, in particular, a compound including an imidazole ring, a neutralizing agent, specifically, for example, at least one acid selected from the group consisting of acetic acid (CH₃COOH), phosphoric acid (H₃PO₄), and sulfuric acid (H₂SO₄) be added.

As the electrolyte, various electrolytes may be used as long as the electrolytes do not have electron conductivity and can conduct protons, and selection is performed in accordance with the necessity. Specifically, for example, the electrolytes are cellophane, perfluorocarbon sulfonic acid (PFS)-based resin membranes, copolymer membranes of trifluorostyrene derivatives, polybenzimidazole membranes impregnated with phosphoric acid, aromatic polyether ketone sulfonic acid membranes, PSSA-PVA (polystyrene sulfonic acid polyvinyl alcohol copolymers), PSSA-EVOH (polystyrene sulfonic acid ethylene-vinylalcohol copolymers), substances composed of ion-exchange resins including fluorine-containing carbon sulfonic acid groups (for example, Nafion (trade name, E. I. du Pont de Nemours and Company in the United States)), and the like.

The enzyme immobilized in at least one of the positive electrode and the negative electrode may be various enzymes and is selected in accordance with the necessity. Furthermore, in addition to the enzyme, an electron mediator is preferably immobilized in at least one of the positive electrode and the negative electrode. If necessary, a buffer material containing a compound including an imidazole ring may also be immobilized in a membrane in which the enzyme and the electron mediator are immobilized.

Specifically, for example, when a monosaccharide such as glucose is used as the fuel, an enzyme immobilized in the negative electrode includes an oxidase that promotes oxidation of the monosaccharide to decompose the monosaccharide, and, in general, in addition to such an oxidase, a coenzyme oxidase that turns back a coenzyme having been reduced by the oxidase to the oxidized form. When the coenzyme is turned back to the oxidized form by the action of the coenzyme oxidase, an electron is produced and the electron is given from the coenzyme oxidase through the electron mediator to the electrode. As the oxidase, for example, NAD⁺ dependent glucose dehydrogenase (GDH) is used. As the coenzyme, for example, nicotinamide adenine dinucleotide (NAD⁺) is used. As the coenzyme oxidase, for example, diaphorase is used.

When a polysaccharide (which is a polysaccharide in a broad sense, denotes all the carbohydrates that produce two or more monosaccharide molecules by hydrolysis, and includes oligosaccharides such as disaccharides, trisaccharides, and tetrasaccharides) is used as the fuel, it is preferred that, in addition to the above-described oxidase, coenzyme oxidase, coenzyme, and electron mediator, a catabolic enzyme that promotes decomposition of the polysaccharide such as hydrolysis to produce monosaccharides such as glucose also be immobilized. As the polysaccharide, specifically, for example, there are starch, amylose, amylopectin, glycogen, cellulose, maltose, sucrose, lactose, and the like. These are polysaccharides in which two or more monosaccharides are bonded together and all the polysaccharides include glucose as a monosaccharide serving as a bonding unit. Note that amylose and amylopectin are components contained in starch. Starch is a mixture of amylose and amylopectin. When glucoamylase is used as a catabolic enzyme for polysaccharides and glucose dehydrogenase is used as an oxidase that decomposes a monosaccharide, a substance containing a polysaccharide that can be decomposed into glucose by glucoamylase, for example, any one of starch, amylose, amylopectin, glycogen, and maltose, may be used as the fuel to generate electric power. Note that the glucoamylase is a catabolic enzyme that hydrolyzes α-glucan such as starch to produce glucose. The glucose dehydrogenase is an oxidase that oxidizes β-D-glucose into D-glucono-δ-lactone. It is preferred that a configuration in which a catabolic enzyme that decomposes a polysaccharide is also immobilized on the negative electrode be employed and a configuration in which a polysaccharide that is finally to be used as the fuel is also immobilized on the negative electrode be employed.

In addition, when starch is used as the fuel, a gel solid fuel prepared by turning starch into a paste may be used. In this case, it is preferred that a technique be employed in which starch having been turned into a paste is brought into contact with a negative electrode on which an enzyme and the like have been immobilized or starch having been turned into a paste is immobilized on the negative electrode together with an enzyme and the like. When such an electrode is used, compared with the case where starch being dissolved in a solution is used, the concentration of starch on the surface of the negative electrode can be maintained to be high, the decomposition reaction by an enzyme is performed more rapidly and the output is increased.
In addition, compared with the solution, the handling of the fuel is easy and the fuel supply system can be simplified. Furthermore, the necessity of using the fuel cell with the right side up is eliminated and hence application of the fuel cell to, for example, a mobile device, is very advantageous.

As the electron mediator, any compound may be basically used; however, a compound including a quinone structure, in particular, a compound including a naphthoquinone structure is preferably used. As such a compound including a naphthoquinone structure, various naphthoquinone derivatives may be used. Specifically, for example, 2-amino-1,4-naphthoquinone (ANQ), 2-amino-3-methyl-1,4-naphthoquinone (AMNQ), 2-methyl-1,4-naphthoquinone (VK3), 2-amino-3-carboxy-1,4-naphthoquinone (ACNQ), or the like is used. As such a compound including a quinone structure, other than a compound including a naphthoquinone structure, for example, anthraquinone or a derivative of anthraquinone may be used. If necessary, the electron mediator may include, in addition to a compound including a quinone structure, one, two or more other compounds serving as electron mediators. As a solvent used upon immobilization of a compound including a quinone structure, in particular, a compound including a naphthoquinone structure, in the negative electrode, acetone is preferably used. In this way, by using acetone as the solvent, the solubility of a compound including a quinone structure can be enhanced and the compound including a quinone structure can be efficiently immobilized in the negative electrode. If necessary, the solvent may include, in addition to acetone, one, two or more other solvents.

In an example, 2-methyl-1,4-naphthoquinone (VK3) serving as an electron mediator, reduced nicotinamide adenine dinucleotide (NADH) serving as a coenzyme, glucose dehydrogenase serving as an oxidase, and diaphorase serving as a coenzyme oxidase are immobilized in a negative electrode. These are preferably immobilized in a proportion of 1.0 (mol):0.33-1.0 (mol):(1.8-3.6) × 10⁶ (U):(0.85-1.7) × 10⁷ (U). Note that U (unit) is an indicator of enzyme activity and indicates the degree in which 1 µmol of a substrate reacts per minute at a certain temperature and a certain pH.

On the other hand, when an enzyme is immobilized in a positive electrode, this enzyme typically includes an oxygen reductase. As this oxygen reductase, for example, bilirubin oxidase, laccase, ascorbate oxidase, or the like may be used. Details of several oxygen reductases (multicopper oxidase) will be described in Table 1. In such a case, in addition to an enzyme, an electron mediator is also preferably immobilized in a positive electrode. As the electron mediator, for example, potassium hexacyanoferrate, potassium ferricyanide, potassium octacyanotungstate, or the like is used. The electron mediator is preferably immobilized at a sufficiently high concentration, for example, 0.64 × 10⁻⁶ mol/mm² or more on average.

**[Table 1]**

| Name | Another name and the like | Origin | Function in organism | Molecular weight | Remark |
|---|---|---|---|---|---|
| Plant laccase | Polyphenol oxidase | Plants | Lignin formation, Glycoprotein | 450-600 aa | pH: to 5 Maximum |
| Fungal laccase | As above | Fungi | Pigment formation, Lignin decomposition, Glycoprotein | As above | pH: 8 Myrothecium 50°C |
| Fet3p | Ferroxidase | Saccharomyces cerevisiae | Iron metabolism, Membrane protein, Glycoprotein | 85 kDa | pH range: 2-9 |
| Hephaestin | As above | Human | As above | 130 kDa | |
| Ceruloplasmin | As above | As above | Iron metabolism, Glycoprotein | 130-135 kDa | Optimum pH: 6.5 KmO₂ = 10⁻²-10⁻³ |
| CueO (YacK) | CuiD, CopA | E. coli and the like | Copper homeostasis | 500 aa | |
| PcoA | | E. coli | Copper resistance | 565 aa | |
| CotA | Spore coat protein | Bacillus (spore forming bacteria) Gram positive | Spore formation Mn(II) oxidization | 65 kDa | 80°C (2-4 hours) |
| CumA | | Pseudomonas Gram negative | | | |
| Ascorbate oxidase | | Plants (vegetables and fruits) | Ascorbic acid metabolism, Glycoprotein | 140 kDa | Maximum: 60°C 30 minutes |

As an immobilization material for immobilizing an enzyme, a coenzyme, an electron mediator, or the like in a negative electrode or a positive electrode, various materials may be used. As such an immobilization material, a polyion complex formed between a polycation such as poly-L-lysine (PLL) or a salt of a polycation and a polyanion such as a polyacrylic acid (for example, sodium polyacrylate (PAAcNa)) or a salt of a polyanion may be preferably used. An enzyme, a coenzyme, an electron mediator, or the like may be made to be contained within the polyion complex. As such an immobilization material, a material composed of poly-L-lysine and glutaraldehyde may be used.

Incidentally, when an electron mediator is immobilized in the positive electrode and the negative electrode of the fuel cell, since an electron mediator generally has a low molecular weight, it is not necessarily easy to completely prevent leaching and to maintain the state in which the electron mediator is immobilized in the positive electrode and the negative electrode for a long period of time. Accordingly, the electron mediator used in the positive electrode may migrate toward the negative electrode and, conversely, the electron mediator used in the negative electrode may migrate toward the positive electrode. In such a case, a decrease in the output and a decrease in the capacitance of the fuel cell may be caused. To overcome such a problem, an electrolyte that has a charge represented by the same sign as that of the charge of the oxidized form or the reduced form of the electron mediator is effectively used. In this way, a repulsive force is exerted between the charge of the electrolyte and the charge of the oxidized form or the reduced form of the electron mediator. Accordingly, the electron mediator is less likely to migrate toward the electrolyte and the migration of the electron mediator through the electrolyte to the opposite side can be effectively suppressed. Typically, by making the electrolyte contain a polymer having a charge represented by the same sign as that of the charge of the oxidized form or the reduced form of the electron mediator, for example, a polyanion or a polycation, the electrolyte is made to have a charge represented by the same sign as that of the charge of the oxidized form or the reduced form of the electron mediator. However, this is not limitative and another method may be used so that the electrolyte is made to have a charge represented by the same sign as that of the charge of the oxidized form or the reduced form of the electron mediator. Specifically, when the oxidized form or the reduced form of an electron mediator used for at least one of the positive electrode and the negative electrode has a negative charge, a polymer having a negative charge such as a polyanion is made to be contained in the electrolyte. When the oxidized form or the reduced form of an electron mediator has a positive charge, a polymer having a positive charge such as a polycation is made to be contained in the electrolyte. As the polyanion, for example, Nafion (trade name, E. I. du Pont de Nemours and Company in the United States), which is an ion-exchange resin including fluorine-containing carbon sulfonic acid groups, dichromate ions (Cr₂O₇²⁻), paramolybdate ions ([Mo₇O₂₄]⁶⁻), a polyacrylic acid (for example, sodium polyacrylate (PAAcNa)), or the like may be used. As the polycation, for example, poly-L-lysine (PLL) or the like may be used.

On the other hand, the inventors of the present invention have found the phenomenon that, by immobilizing a phospholipid such as dimyristoylphosphatidylcholine (DMPC) in a negative electrode in addition to an enzyme and an electron mediator, the output of the fuel cell can be considerably increased. That is, they have found that a phospholipid serves as an output increasing agent. The reason why the output can be increased by the immobilization of a phospholipid has been thoroughly studied. As a result, it has been concluded that one reason why existing fuel cells do not provide sufficiently high output is that an enzyme and an electron mediator immobilized in the negative electrode are not uniformly mixed together and the two are separated from each other and in an agglomeration state; however, the immobilization of a phospholipid can prevent the enzyme and the electron mediator from being separated from each other and agglomerating and enables uniform mixing of the enzyme and the electron mediator. Furthermore, the cause for which addition of a phospholipid enables uniform mixing of an enzyme and an electron mediator has been studied. As a result, they have found a very rare phenomenon in which addition of a phospholipid considerably increases the diffusion coefficient of the reduced form of the electron mediator. That is, they have found that a phospholipid functions as an electron mediator diffusion promoting agent. This advantage by the immobilization of a phospholipid is prominent when, in particular, the electron mediator is a compound including a quinone structure. Similar advantage can be provided by using, instead of a phospholipid, a derivative of a phospholipid, a polymer of a phospholipid, or a polymer of a derivative of a phospholipid. Note that, most generally put, the output increasing agent is an agent that increases a reaction rate in an electrode in which an enzyme and an electron mediator are immobilized to increase the output. In addition, most generally put, the electron mediator diffusion promoting agent is an agent that increases the diffusion coefficient of an electron mediator within an electrode in which an enzyme and the electron mediator are immobilized or that maintains or increases the concentration of the electron mediator in the vicinity of the electrode.

As a material for a positive electrode or a negative electrode, a conventionally known material such as a carbon-based material may be used; or a porous conductive material including a structure composed of a porous material and a material that is mainly composed of a carbon-based material and covers at least a part of the surface of the structure may be used. Such a porous conductive material may be provided by coating at least a part of the surface of a structure composed of a porous material with a material that is mainly composed of a carbon-based material. The porous material constituting the structure of the porous conductive material may be basically any material as long as the structure can be maintained with stability in spite of a high porosity and the porous material may be conductive or non-conductive. As the porous material, a material that has a high porosity and a high conductivity is preferably used. As such a porous material that has a high porosity and a high conductivity, specifically, a metal material (a metal or an alloy), a carbon-based material whose structure has been strengthened (improvement has been achieved in terms of brittleness), or the like may be used. When a metal material is used as the porous material, the state stability of a metal material varies in accordance with a usage environment in terms of the pH of a solution, potential, or the like and hence various selections may be performed. For example, foam metals and foam alloys such as nickel, copper, silver, gold, nickel-chromium alloys, stainless steel, and the like are materials that are readily available. As the porous material, other than the above-described metal materials and carbon-based materials, a resin material (for example, in the form of a sponge) may be used. The porosity and the pore size (minimum pore size) of the porous material is determined in accordance with the porosity and the pore size that are required for the porous conductive material in consideration of the thickness of a material that is mainly composed of a carbon-based material and is to be applied to the surface of the structure composed of the porous material. The pore size of the porous material is generally 10 nm to 1 mm, typically, 10 nm to 600 µm. On the other hand, as the material covering the surface of the structure, a material that has conductivity and is stable in estimated operational potentials is required. Here, as such a material, a material that is mainly composed of a carbon-based material is used. Carbon-based materials generally have a wide potential window and are usually chemically stable. As materials that are mainly composed of carbon-based materials, specifically, there are materials that are composed of carbon-based materials only and materials that are mainly composed of carbon-based materials and include small amounts of auxiliary materials selected in accordance with, for example, characteristics required for porous conductive materials. Specific examples of the latter materials are a material whose electrical conductivity has been enhanced by adding a high conductivity material such as a metal to a carbon-based material and a material to which a function other than conductivity has been imparted, for example, a surface water repellency having been imparted by adding a polytetrafluoroethylene-based material or the like to a carbon-based material. Although there are various carbon-based materials, any carbon-based material may be used. An elemental carbon or a material in which another element is added to carbon may be used. As such a carbon-based material, in particular, a micro-powder carbon material having a high conductivity and a large surface area is preferred. As such a carbon-based material, specifically, for example, a material to which a high conductivity has been imparted such as KB (Ketjenblack) or a high-performance carbon material such as carbon nanotubes or fullerene may be used. As a coating method of a material mainly composed of such a carbon-based material, any coating method may be used as long as the surface of a structure composed of a porous material can be coated, if necessary, for example, by using an appropriate binding agent. The pore size of the porous conductive material is selected so as to be a size such that a solution containing a substrate and the like can be readily passed through the pores, and is generally 9 nm to 1 mm, more generally 1 µm to 1 mm, and still more generally 1 to 600 µm. In the state in which at least a part of the surface of a structure composed of a porous material is covered with a material that is mainly composed of a carbon-based material or in the state in which at least a part of the surface of a structure composed of a porous material is coated with a material that is mainly composed of a carbon-based material, it is desirable that all the pores be in communication with each other or the occurrence of clogging due to the material that is mainly composed of a carbon-based material be prevented.

The general configuration of such a fuel cell is selected in accordance with the necessity. For example, when the configuration of a coin shape or a button shape is employed, a structure in which a positive electrode, an electrolyte, and a negative electrode are contained within a space formed between a positive electrode collector having a structure through which an oxidizing agent can be passed and a negative electrode collector having a structure through which a fuel can be passed is preferably employed. In this case, typically, the space in which the positive electrode, the electrolyte, and the negative electrode are contained is formed by swaging the edge of one of the positive electrode collector and the negative electrode collector to the other of the positive electrode collector and the negative electrode collector through an insulating sealing member. However, this is not limitative and, if necessary, the space may be formed by another processing method. The positive electrode collector and the negative electrode collector are electrically insulated from each other by the insulating sealing member. As the insulating sealing member, gaskets constituted by various elastic bodies of silicone rubber and the like are typically used; however, this is not limitative. The planar shape of the positive electrode collector and the negative electrode collector can be selected in accordance with the necessity and is, for example, circular, elliptic, quadrangular, hexagonal, or the like. Typically, the positive electrode collector includes one or plural oxidizing agent supply ports and the negative electrode collector includes one or plural fuel supply ports. However, this is not necessarily limitative. For example, by using a material through which an oxidizing agent can pass as a material for the positive electrode collector, the necessity of forming oxidizing agent supply ports is eliminated; and by using a material through which a fuel can pass as a material for the negative electrode collector, the necessity of forming fuel supply ports is eliminated. The negative electrode collector typically includes a fuel storage section. The fuel storage section may be integrally formed together with the negative electrode collector or may be formed so as to be detachably mountable to the negative electrode collector. The fuel storage section typically includes a lid for sealing. In this case, the lid is opened and the fuel can be injected into the fuel storage section. The fuel may be injected, for example, from a side surface of the fuel storage section without using a lid for sealing. When the fuel storage section is formed so as to be detachably mountable to the negative electrode collector, for example, as the fuel storage section, a fuel tank, a fuel cartridge, or the like that has been filled with fuel may be attached. Such a fuel tank and a fuel cartridge may be disposable; however, in view of effective use of resources, they are preferably configured to be filled with fuel. In addition, a fuel tank or a fuel cartridge that has been used may be replaced with a fuel tank or a fuel cartridge that has been filled with fuel. Furthermore, for example, by forming the fuel storage section in the form of a closed container including a supply port and an ejection port of fuel and continuously supplying fuel into the closed container from the outside through the supply port, the fuel cell can be continuously used. Alternatively, a fuel cell without a fuel storage section may be used in the state of being floated on fuel in an open-system fuel tank such that the negative electrode side of the fuel cell is downside and the positive electrode side is upside.

The fuel cell may have a structure in which a negative electrode, an electrolyte, a positive electrode, and a positive electrode collector that has a structure in which an oxidizing agent can pass therethrough are sequentially provided about a predetermined central axis; and a negative electrode collector that has a structure in which fuel can pass therethrough is provided so as to be electrically connected to the negative electrode. In this fuel cell, the negative electrode may have a tubular shape whose sectional shape is circular, elliptic, polygonal, or the like or may have a prism shape whose sectional shape is circular, elliptic, polygonal, or the like. When the negative electrode has a tubular shape, for example, the negative electrode collector may be provided on the inner circumferential side of the negative electrode, may be provided between the negative electrode and the electrolyte, may be provided on at least one end face of the negative electrode, or may be provided in two or more of these positions. In addition, the negative electrode may be configured to store fuel. For example, the negative electrode may be formed of a porous material and this negative electrode may be made to function also as a fuel storage section. Alternatively, a fuel storage section having a columnar shape may be provided along the predetermined central axis. For example, when the negative electrode collector is provided on the inner circumferential side of the negative electrode, this fuel storage section may be the space itself surrounded by the negative electrode collector or a container such as a fuel tank or a fuel cartridge provided within the space as a separate member from the negative electrode collector. This container may be detachably mountable or fixed. The fuel storage section may be, for example, cylindrical, elliptic cylindrical, polygonal columnar such as quadrangular columnar or hexagonal columnar, or the like; however, this is not limitative. The electrolyte may be formed in the form of a bag-shaped container enveloping the entirety of the negative electrode and the negative electrode collector. In this configuration, when the fuel storage section is fully charged with fuel, the fuel can be brought into contact with the entirety of the negative electrode. At least a portion of this container, the portion being disposed between the positive electrode and the negative electrode, may be formed of an electrolyte and other portions may be formed of a material other than the electrolyte. By forming the container as a closed container including a supply port and an ejection port of fuel and continuously supplying fuel into the container from the outside through the supply port, the fuel cell can be continuously used. As the negative electrode, preferably, in order to sufficiently store fuel therein, a negative electrode having a high porosity is preferred and, for example, a negative electrode having a porosity of 60% or more is preferred.

As the positive electrode and the negative electrode, pellet electrodes may be used. Such a pellet electrode may be formed by, for example, mixing a carbon-based material (in particular, a micro-powder carbon material having a high conductivity and a large surface area is preferred), specifically, for example, a material to which a high conductivity has been imparted such as KB (Ketjenblack), a high-performance carbon material such as carbon nanotubes or fullerene, or the like, and, if necessary, a binder such as polyvinylidene fluoride, a powder of the above-described enzyme (or a solution of the enzyme), a powder of a coenzyme (or a solution of the coenzyme), a powder of an electron mediator (or a solution of the electron mediator), a powder of a polymer for immobilization (or a solution of the polymer), or the like with an agate mortar; appropriately drying the mixture, and subjecting the mixture to press working into a predetermined shape. Although the thickness (electrode thickness) of the pellet electrode is also determined in accordance with the necessity, for example, the thickness is about 50 µm. For example, when a coin-shaped fuel cell is produced, a pellet electrode can be formed by subjecting the above-described materials for forming a pellet electrode to press working with a tablet machine into a circular shape (the diameter is, for example, 15 mm; however, the diameter is not restricted thereto and is determined in accordance with the necessity). When the pellet electrode is formed, in order to achieve a required electrode thickness, for example, the proportion of carbon of the materials for forming the pellet electrode, pressure in the pressing, or the like is controlled. When a positive electrode or a negative electrode is inserted into a coin-shaped cell can, for example, by inserting a metal mesh spacer between the positive electrode or the negative electrode and the cell can, the electrical contact therebetween is preferably established.

As for a method for producing a pellet electrode, other than the above-described method, for example, a mixture solution (aqueous or organic solvent mixture solution) of a carbon-based material, if necessary, a binder, and enzyme immobilization components (an enzyme, a coenzyme, an electron mediator, a polymer, or the like) may be appropriately applied to a collector or the like and dried; and the entirety may be subjected to press working and then cut and divided so as to have a desired electrode size.

The fuel cell may be applied to almost anything that requires electric power and the size is not restricted. For example, the fuel cell may be applied to electronic apparatuses, mobile units (automobiles, two-wheeled vehicles, aircraft, rockets, space craft, and the like), power plants, construction equipment, machine tools, electric-power generating systems, cogeneration systems, and the like. The output, size, shape, type of fuel, or the like of the fuel cell is determined in accordance with the application or the like.

A second invention provides
an electronic apparatus including one or a plurality of fuel cells,
wherein at least one of the fuel cells
includes a structure in which a positive electrode and a negative electrode face each other with an electrolyte therebetween, the electrolyte containing a buffer material; an enzyme is immobilized in at least one of the positive electrode and the negative electrode; and the buffer material contains a compound including an imidazole ring.

Such electronic apparatuses may be basically any electronic apparatuses and include both portable apparatuses and stationary apparatuses. Specific examples thereof are cellular phones, mobile devices, robots, personal computers, game machines, on-vehicle devices, domestic electric appliances, industrial products, and the like.

In the second invention, those having been described regarding the first invention are applicable.

A third invention provides
a fuel cell including a structure in which a positive electrode and a negative electrode face each other with an electrolyte therebetween, the electrolyte containing a buffer material,
wherein an enzyme is immobilized in at least one of the positive electrode and the negative electrode; and
the buffer material contains at least one selected from the group consisting of 2-aminoethanol, triethanolamine, TES, and BES.

Here, TES is N-Tris(hydroxymethyl)methyl-2-aminoethanesulfonic acid, and BES is N,N-Bis(2-hydroxyethyl)-2-aminoethanesulfonic acid.

In the third invention, if necessary, the buffer material may be made to contain a compound including an imidazole ring or another buffer material, or at least one acid selected from the group consisting of acetic acid, phosphoric acid, and sulfuric acid may be added to the buffer material.

In the third invention, as long as not being contrary to its nature, those having been described regarding the first and second inventions are applicable. In addition, advantages similar to those in the first invention can be provided.

In the invention configured as described above, since a buffer material contained in an electrolyte contains a compound including an imidazole ring, a sufficient buffering capability can be provided. Accordingly, even when an increase or a decrease in protons occurs within a proton electrode or an enzyme-immobilized membrane due to an enzyme reaction through protons in a high power output operation of the fuel cell, a sufficient buffering capability can be provided and deviation of the pH of the electrolyte around the enzyme from the optimum pH can be sufficiently suppressed to a small degree. Furthermore, by adding at least one acid selected from the group consisting of acetic acid, phosphoric acid, and sulfuric acid to the buffer material, the activity of the enzyme can be maintained at a high level. Therefore, electrode reactions relating to the enzyme, a coenzyme, an electron mediator, and the like can be efficiently and steadily performed.

According to the invention, a sufficient buffering capability can be provided even in a high power output operation and the inherent capability of an enzyme can be sufficiently exerted, and hence, a fuel cell having excellent properties can be provided. In addition, by employing such an excellent fuel cell, high-performance electronic apparatuses and the like can be provided.

### Brief Description of Drawings

[Fig. 1] Fig. 1 is a diagram illustrating a biofuel cell according to a first embodiment of the present invention.
[Fig. 2] Fig. 2 is a diagram schematically illustrating the detailed configuration of the negative electrode of a biofuel cell according to a first embodiment of the present invention, an example of an enzyme group immobilized in the negative electrode, and electron transfer reactions in the enzyme group.
[Fig. 3] Fig. 3 is a diagram illustrating the results of chronoamperometry performed to evaluate a biofuel cell according to a first embodiment of the present invention.
[Fig. 4] Fig. 4 is a diagram illustrating the relationship between buffer solution concentration and current density to be achieved, the relationship being provided by the results of chronoamperometry performed to evaluate a biofuel cell according to a first embodiment of the present invention.
[Fig. 5] Fig. 5 is a diagram illustrating the system of measurement used for the chronoamperometry measurement illustrated in Fig. 3.
[Fig. 6] Fig. 6 is a diagram illustrating the results of cyclic voltammetry performed to evaluate a biofuel cell according to a first embodiment of the present invention.
[Fig. 7] Fig. 7 is a diagram illustrating the system of measurement used for the cyclic voltammetry measurement illustrated in Fig. 6.
[Fig. 8] Fig. 8 is a diagram illustrating the results of chronoamperometry performed by using a buffer solution containing imidazole and a NaH₂PO₄ buffer solution in a biofuel cell according to a first embodiment of the present invention.
[Fig. 9] Fig. 9 is a diagram for illustrating a mechanism with which a large current can be steadily provided when a buffer solution containing imidazole is used in a biofuel cell according to a first embodiment of the present invention.
[Fig. 10] Fig. 10 is a diagram for illustrating a mechanism with which the current decreases when a NaH₂PO₄ buffer solution is used in a biofuel cell according to a first embodiment of the present invention.
[Fig. 11] Fig. 11 is a diagram illustrating the relationship between buffer solution concentration and current density when various buffer solutions are used in a biofuel cell according to a first embodiment of the present invention.
[Fig. 12] Fig. 12 is a diagram illustrating the relationship between buffer solution concentration and current density when various buffer solutions are used in a biofuel cell according to a first embodiment of the present invention.
[Fig. 13] Fig. 13 is a diagram illustrating the relationship between the molecular weight of the buffer material of a buffer solution and current density when various buffer solutions are used in a biofuel cell according to a first embodiment of the present invention.
[Fig. 14] Fig. 14 is a diagram illustrating the relationship between pKₐ of a buffer solution and current density when various buffer solutions are used in a biofuel cell according to a first embodiment of the present invention.
[Fig. 15] Fig. 15 is a diagram illustrating a specific example of the configuration of a biofuel cell according to a first embodiment of the present invention.
[Fig. 16] Fig. 16 is a diagram illustrating the measurement results of the output of a biofuel cell used for evaluation in a first embodiment of the present invention.
[Fig. 17] Fig. 17 is a diagram illustrating the results of cyclic voltammetry performed to demonstrate the effect of preventing an electron mediator from passing in a biofuel cell according to a second embodiment of the present invention.
[Fig. 18] Fig. 18 is a diagram illustrating the system of measurement used for the cyclic voltammetry performed to demonstrate the effect of preventing an electron mediator from passing in a biofuel cell according to a second embodiment of the present invention.
[Fig. 19] Fig. 19 is a diagram illustrating the results of cyclic voltammetry performed to demonstrate the effect of preventing an electron mediator from passing in a biofuel cell according to a second embodiment of the present invention.
[Fig. 20] Fig. 20 is a diagram illustrating the results of cyclic voltammetry performed to demonstrate the effect of preventing an electron mediator from passing in a biofuel cell according to a second embodiment of the present invention.
[Fig. 21] Fig. 21 is a top view, a sectional view, and a back view illustrating a biofuel cell according to a third embodiment of the present invention.
[Fig. 22] Fig. 22 is an exploded perspective view illustrating a biofuel cell according to a third embodiment of the present invention.
[Fig. 23] Fig. 23 is a diagram for illustrating a method for producing a biofuel cell according to a third embodiment of the present invention.
[Fig. 24] Fig. 24 is a diagram for illustrating a first example of usage of a biofuel cell according to a third embodiment of the present invention.
[Fig. 25] Fig. 25 is a diagram for illustrating a second example of usage of a biofuel cell according to a third embodiment of the present invention.
[Fig. 26] Fig. 26 is a diagram for illustrating a third example of usage of a biofuel cell according to a third embodiment of the present invention.
[Fig. 27] Fig. 27 is a diagram illustrating a biofuel cell according to a fourth embodiment of the present invention and usage of the biofuel cell.
[Fig. 28] Fig. 28 is a front view and a longitudinal sectional view illustrating a biofuel cell according to a fifth embodiment of the present invention.
[Fig. 29] Fig. 29 is an exploded perspective view illustrating a biofuel cell according to a fifth embodiment of the present invention.
[Fig. 30] Fig. 30 is a diagram and a sectional view for illustrating the structure of a porous conductive material used for an electrode material for a negative electrode in a biofuel cell according to a sixth embodiment of the present invention.
[Fig. 31] Fig. 31 is a diagram for illustrating a method for producing a porous conductive material used for an electrode material for a negative electrode in a biofuel cell according to a sixth embodiment of the present invention.
[Fig. 32] Fig. 32 is a diagram illustrating the results of cyclic voltammetry performed with single and multiple electron mediators in a biofuel cell.
[Fig. 33] Fig. 33 is a diagram illustrating the results of cyclic voltammetry performed with single and multiple electron mediators in a biofuel cell.
[Fig. 34] Fig. 34 is a diagram illustrating the results of cyclic voltammetry performed with single and multiple electron mediators in a biofuel cell.

### Best Modes for Carrying Out the Invention

Hereinafter, embodiments according to the present invention will be described with reference to the drawings.

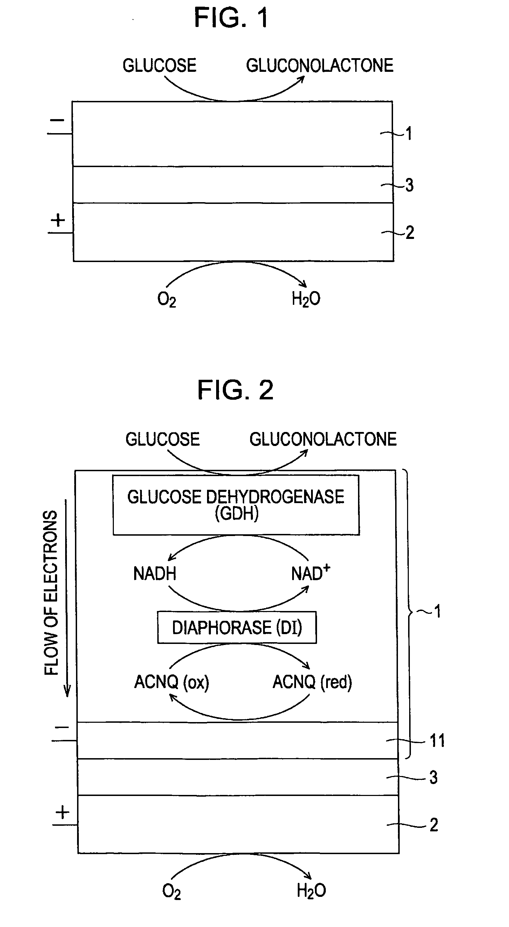

Fig. 1 schematically illustrates a biofuel cell according to a first embodiment of the present invention. This biofuel cell uses glucose as the fuel. Fig. 2 schematically illustrates the detailed configuration of the negative electrode of the biofuel cell, an example of an enzyme group immobilized in the negative electrode, and electron transfer reactions in the enzyme group.

As illustrated in Fig. 1, the biofuel cell has a structure in which a negative electrode 1 and a positive electrode 2 face each other with an electrolyte layer 3 therebetween, the electrolyte layer 3 conducting protons only. The negative electrode 1 decomposes glucose supplied as the fuel with an enzyme so that electrons are extracted and protons (H⁺) are produced. The positive electrode 2 generates water from protons having been transported from the negative electrode 1 through the electrolyte layer 3, electrons having been transported from the negative electrode 1 through an external circuit, and oxygen, for example, in the air.

The negative electrode 1 is constituted by, for example, on an electrode 11 (refer to Fig. 2) composed of porous carbon or the like, an enzyme participating in the decomposition of glucose, a coenzyme (for example, NAD⁺, NADP⁺, or the like) whose reduced form is produced by the oxidation reaction in the decomposition process of glucose, a coenzyme oxidase (for example, diaphorase) that oxidizes the reduced form (for example, NADH, NADPH, or the like) of the coenzyme, and an electron mediator that receives electrons from the coenzyme oxidase, the electrons being produced through the oxidation of the coenzyme, and gives the electrons to the electrode 11 are immobilized with an immobilization material composed of, for example, a polymer or the like.

As an enzyme participating in the decomposition of glucose, for example, glucose dehydrogenase (GDH) may be used. By making this oxidase present, for example, β-D-glucose can be oxidized into D-glucono-δ-lactone.

Furthermore, by making two enzymes of gluconokinase and phosphogluconate dehydrogenase (PhGDH) present, the D-glucono-δ-lactone can be decomposed into 2-keto-6-phospho-D-gluconate.
That is, D-glucono-δ-lactone is hydrolyzed into D-gluconate and D-gluconate is phosphorylated into 6-phospho-D-gluconate by the hydrolysis of adenosinetriphosphate (ATP) into adenosinediphosphate (ADP) and phosphoric acid in the presence of gluconokinase. The 6-phospho-D-gluconate is oxidized into 2-keto-6-phospho-D-gluconate by the action of the oxidase PhGDH.

In addition, other than the above-described decomposition process, glucose can be decomposed to CO₂ by employing glucose metabolism. This decomposition process employing glucose metabolism is broadly divided into the decomposition of glucose and production of pyruvic acid by the glycolysis system and the TCA cycle, which are well-known reaction systems.

The oxidation reaction in the decomposition process of a monosaccharide is performed together with the reduction reaction of a coenzyme. Such a coenzyme is substantially determined in accordance with an enzyme to be affected. For GDH, the coenzyme used is NAD⁺. That is, while β-D-glucose is oxidized into D-glucono-δ-lactone by the action of GDH, NAD⁺ is reduced into NADH to produce H⁺.

The produced NADH is immediately oxidized into NAD⁺ in the presence of diaphorase (DI) to produce two electrons and H⁺. Accordingly, two electrons and two H⁺ per glucose molecule are produced by a single step oxidation reaction. By a two step oxidation reaction, four electrons and four H⁺ are produced in total.

The electrons produced by the above-described process are given from diaphorase through an electron mediator to the electrode 11. H⁺ are transported through the electrolyte layer 3 to the positive electrode 2.

The electron mediator receives electrons from and gives electrons to the electrode 11. The output voltage of a fuel cell depends on the oxidation-reduction potential of the electron mediator. That is, to achieve a higher output voltage, an electron mediator having a more negative potential may be selected for the negative electrode 1. However, the reaction affinity of an electron mediator for an enzyme, an electron exchange rate between an electron mediator and the electrode 11, the structural stability of an electron mediator with respect to inhibiting factors (light, oxygen, and the like), and the like should be considered. In view of these respects, as an electron mediator affecting the negative electrode 1, 2-amino-3-carboxy-1,4-naphthoquinone (ACNQ), vitamin K3, or the like is preferred. Other than these, for example, a compound including a quinone structure, a complex of a metal such as osmium (Os), ruthenium (Ru), iron (Fe), or cobalt (Co), a viologen compound such as benzylviologen, a compound having a nicotinamide structure, a compound having a riboflavin structure, a compound having a nucleotide-phosphate structure, or the like may be used as an electron mediator.

The electrolyte layer 3 is a proton conductor that transports H⁺ produced in the negative electrode 1 to the positive electrode 2. The electrolyte layer 3 is composed of a material that does not have electron conductivity and can transport H⁺. For the electrolyte layer 3, for example, a material appropriately selected from the above-described materials may be used. In this case, the electrolyte layer 3 contains a buffer solution containing a compound including an imidazole ring as a buffer material. The compound including an imidazole ring may be appropriately selected from the above-described materials such as imidazole. Although the concentration of a compound including an imidazole ring serving as a buffer material is selected in accordance with the necessity, the compound is preferably made to be contained at a concentration of 0.2 M or more and 3 M or less. As a result, a high buffering capability can be provided and the inherent capability of the enzyme can be sufficiently exerted even in a high power output operation of the fuel cell. Furthermore, although too large or too small an ionic strength (I. S.) adversely affects the enzyme activity, in consideration of electrochemical reactivity, an appropriate ionic strength of, for example, about 0.3 is preferred. Note that there are optimum values of pH and ionic strength depending on an enzyme used and the above-described value is not limitative.

The above-described enzyme, coenzyme, and electron mediator are preferably immobilized on the electrode 11 with an immobilization material in order to efficiently capture the enzyme reaction phenomenon occurring near the electrode as electric signals. Furthermore, by immobilizing, on the electrode 11, an enzyme and a coenzyme for decomposing the fuel, the enzyme reaction system of the negative electrode 1 can be stabilized. As such an immobilization material, for example, a combined material of glutaraldehyde (GA) and poly-L-lysine (PLL) or a combined material of sodium polyacrylate (PAAcNa) and poly-L-lysine (PLL) may be used; such compounds may be used alone; and furthermore, another polymer may be used. By using an immobilization material in which glutaraldehyde and poly-L-lysine are combined, the enzyme immobilization capabilities of the compounds can be considerably improved and an excellent enzyme immobilization capability can be provided in the entirety of the immobilization material. In this case, as the composition ratio of glutaraldehyde and poly-L-lysine, an optimum value varies in accordance with an enzyme to be immobilized and a substrate for the enzyme; however, in general, any composition ratio may be employed. In a specific example, an aqueous solution (0.125%) of glutaraldehyde and an aqueous solution (1%) of poly-L-lysine are used and the ratio thereof is made 1:1, 1:2, 2:1, or the like.

In Fig. 2, as an example, a case is illustrated in which an enzyme participating in the decomposition of glucose is glucose dehydrogenase (GDH); a coenzyme whose reduced form is produced by the oxidation reaction in the decomposition process of glucose is NAD⁺; a coenzyme oxidase that oxidizes NADH, which is the reduced form of the coenzyme, is diaphorase (DI); and an electron mediator that receives electrons produced by the coenzyme oxidase through the oxidation of the coenzyme and gives the electrons to the electrode 11 is ACNQ.

In the positive electrode 2, an oxygen reductase and an electron mediator that receives electrons from and gives electrons to an electrode are immobilized on the electrode composed of, for example, porous carbon or the like. As the oxygen reductase, for example, bilirubin oxidase (BOD), laccase, ascorbate oxidase, or the like may be used. As the electron mediator, for example, hexacyanoferrate ions produced by the electrolytic dissociation of potassium hexacyanoferrate may be used. Such an electron mediator is preferably immobilized at a sufficiently high concentration, for example, 0.64 × 10⁻⁶ mol/mm² or more on average.

In the positive electrode 2, in the presence of an oxygen reductase, water is produced by reducing oxygen in the air with H⁺ from the electrolyte layer 3 and electrons from the negative electrode 1.

In the thus-configured fuel cell, when glucose is supplied to the negative electrode 1 side, the glucose is decomposed by a catabolic enzyme including an oxidase. By the participation of an oxidase in the decomposition process of the monosaccharide, electrons and H⁺ can be produced on the negative electrode 1 side and a current can be generated between the negative electrode 1 and the positive electrode 2.

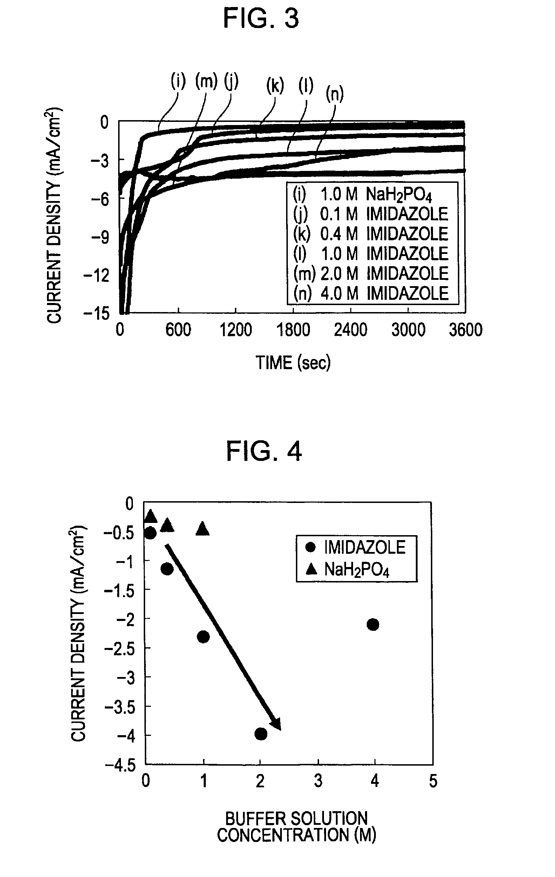

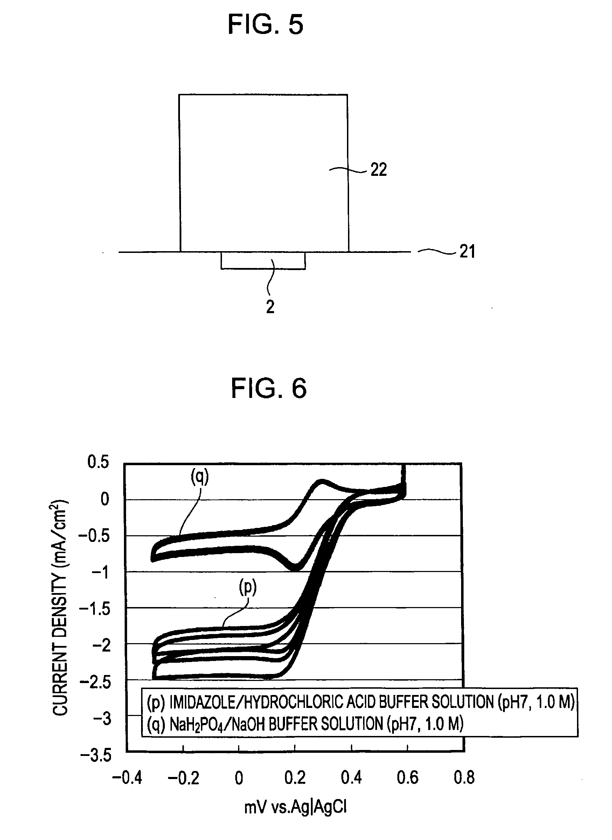

Hereinafter, the effect of maintaining and enhancing a current value in the case where BOD is immobilized on the positive electrode 2 as an oxygen reductase and a solution in which imidazole and hydrochloric acid are mixed together and the pH is adjusted to 7 is used as a buffer solution will be described. As the BOD, a BOD purchased from Amano Enzyme Inc. was used. In the case, Table 2 and Fig. 3 illustrate the results of chronoamperometry by which the measurement was performed while the concentration of the imidazole was changed. In addition, Fig. 4 illustrates the buffer solution concentration (concentration of a buffer material in a buffer solution) dependency of current values (the values of current density after 3600 seconds in Table 2 and Fig. 3). In Table 2 and Fig. 4, for comparison, the results of the case where a 1.0 M NaH₂PO₄/NaOH buffer solution (pH 7) was used as a buffer solution are also illustrated. As illustrated in Fig. 5, the measurement was performed in the state where a film-shaped cellophane 21 was placed on the positive electrode 2 and a buffer solution 22 was in contact with the cellophane 21. As the positive electrode 2, an enzyme/electron mediator immobilized electrode prepared in the following manner was used. First, a commercially available carbon felt (BO050 manufactured by TORAY) was used as porous carbon and squares of 1 cm per side was cut from the carbon felt. Then, the carbon felts were sequentially impregnated with 80 µl of hexacyanoferrate ions (100 mM), 80 µl of poly-L-lysine (1 wt%), and 80 µl of a BOD solution (50 mg/ml) and dried to provide the enzyme/electron mediator immobilized electrodes. Two sheets of the thus-prepared enzyme/electron mediator immobilized electrodes were stacked to provide the positive electrode 2.

**[Table 2]**

| | | Current density (mA/cm²) | | | | | |
|---|---|---|---|---|---|---|---|
| | | 1 sec | 180 sec | 300 sec | 600 sec | 1800 sec | 3600 sec |
| 1.0 M | NaH₂PO₄ | -17.22 | -3.11 | -1.10 | -0.73 | -0.41 | -0.34 |
| 0.1 M | imidazole | -5.64 | -3.98 | -3.71 | -2.98 | -0.70 | -0.54 |
| 0.4 M | imidazole | -11.18 | -6.37 | -4.69 | -2.48 | -1.35 | -1.16 |
| 1.0 M | imidazole | -15.59 | -8.44 | -5.81 | -3.86 | -2.60 | -2.32 |
| 2.0 M | imidazole | -25.10 | -7.39 | -5.88 | -5.01 | -4.20 | -3.99 |
| 4.0 M | imidazole | -5.08 | -3.90 | -4.19 | -4.53 | -3.47 | -2.13 |

Table 2 and Fig. 3 show that, when the concentration of NaH₂PO₄ is 1.0 M, the initial current is output; however, the current considerably decreases after 3600 seconds. In contrast, in particular, when the concentrations of imidazole are 0.4 M, 1.0 M, and 2.0 M, a decrease in the current is not substantially observed even after 3600 seconds. Fig. 4 shows that the current value linearly increases relative to the concentration within the imidazole concentration range of 0.2 to 2.5 M. In addition, although both the NaH₂PO₄/NaOH buffer solution and the imidazole/hydrochloric acid buffer solution had a pKₐ of about 7 and substantially the same oxygen solubility, when imidazole was present in the buffer solution having the same concentration as the NaH₂PO₄/NaOH buffer solution, a large oxygen reduction current was obtained.

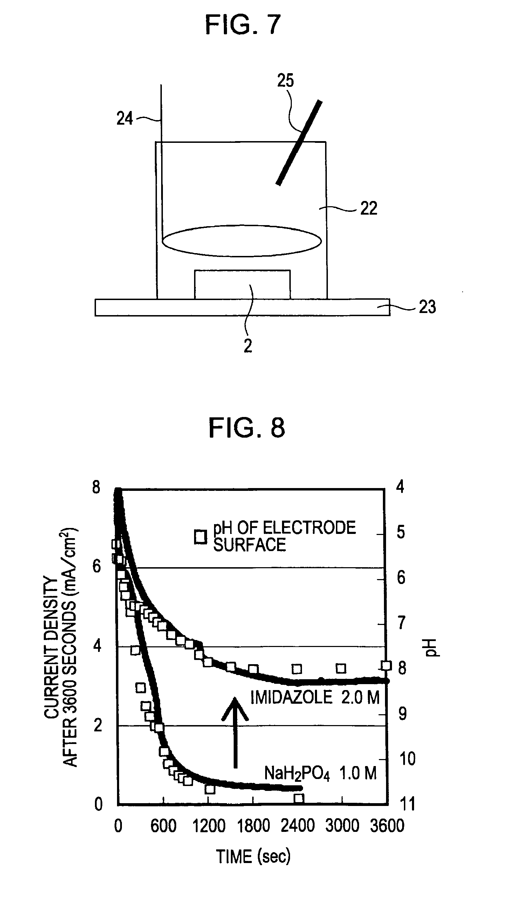

After the chronoamperometry was performed for 3600 seconds as described above, cyclic voltammetry (CV) in a potential of - 0.3 to +0.6 V was performed. The results are illustrated in Fig. 6. Note that, as illustrated in Fig. 7, this measurement was performed in the state where the positive electrode 2 constituted by an enzyme/electron mediator immobilized electrode as with above was used as the active electrode and placed on a gas permeable PTFE (polytetrafluoroethylene) membrane 23, and the buffer solution 22 was in contact with the positive electrode 2. A counter electrode 24 and a reference electrode 25 were immersed in the buffer solution 22 and an electrochemical measurement device (not shown) was connected to the positive electrode 2 serving as the active electrode, the counter electrode 24, and the reference electrode 25. As the counter electrode 24, a Pt wire was used. As the reference electrode 25, Ag|AgCl was used. The measurement was performed at the atmospheric pressure. The measurement temperature was 25°C. As the buffer solution 22, two types of an imidazole/hydrochloric acid buffer solution (pH 7, 1.0 M) and a NaH₂PO₄/NaOH buffer solution (pH 7, 1.0 M) were used.

Fig. 6 shows that, when the imidazole/hydrochloric acid buffer solution (pH 7, 1.0 M) was used as the buffer solution 22, an extremely good CV characteristic was achieved.

In summary, it has been confirmed that imidazole buffer solutions are better even under the different measurement system.

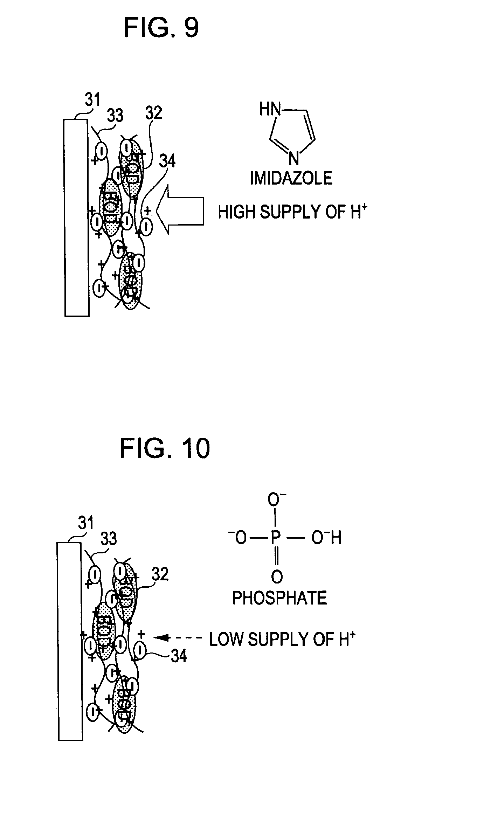

Fig. 8 illustrates the results of chronoamperometry in which BOD was immobilized in the positive electrode 2 and a 2.0 M imidazole/hydrochloric acid buffer solution and a 1.0 M NaH₂PO₄/NaOH buffer solution were used, the chronoamperometry being performed in the same manner as described above, together with the measurement results of pH on the surface of the electrode during the chronoamperometry. Note that the imidazole/hydrochloric acid buffer solution had a pKₐ of 6.95, a conductivity of 52.4 mS/cm, an oxygen solubility of 0.25 mM, and a pH of 7. In addition, the NaH₂PO₄/NaOH buffer solution had a pKₐ of 6.82 (H₂PO₄⁻), a conductivity of 51.2 mS/cm, an oxygen solubility of 0.25 mM, and a pH of 7. Fig. 8 shows that, in the case of using the 2.0 M imidazole/hydrochloric acid buffer solution, a current density was about 15 times higher than that in the case of using the 1.0 M NaH₂PO₄/NaOH buffer solution. In addition, Fig. 8 shows that the change in the current substantially corresponds to the change in the pH on the surface of the electrode. The reason why these results were obtained will be described with reference to Figs. 9 and 10.

Figs. 9 and 10 illustrate the state where a BOD 32 is immobilized on an electrode 31 together with an electron mediator 34 by using an immobilization material 33 such as a polyion complex. As illustrated in Fig. 9, when the 2.0 M imidazole/hydrochloric acid buffer solution is used, it is considered that sufficiently large number of protons (H⁺) are supplied and hence a high buffering capability is provided, and the pH is stabilized and hence a high current density is steadily provided. In contrast, as illustrated in Fig. 10, when the 1.0 M NaH₂PO₄/NaOH buffer solution is used, it is considered that since the amount of H⁺ supplied is small, the buffering capability is insufficient and hence the pH is considerably increased and the current density is decreased.

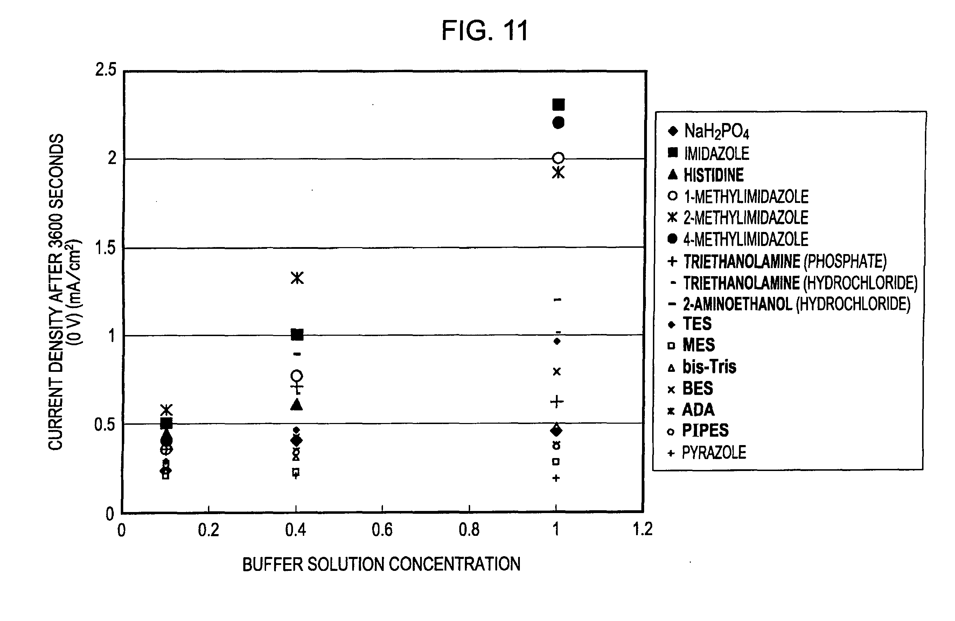

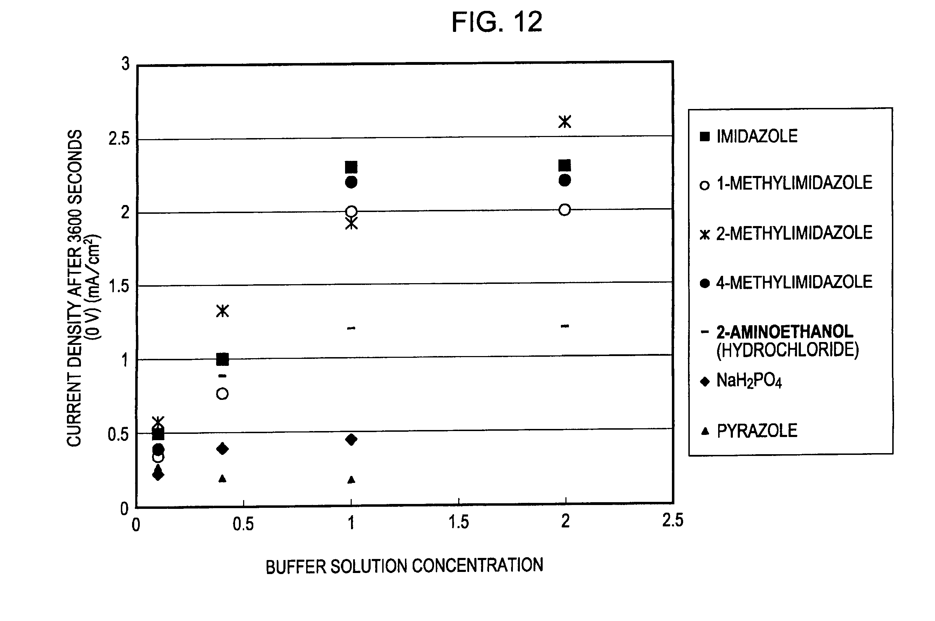

Figs. 11 and 12 illustrate, in the case of using various buffer solutions, changes in current density after 3600 seconds (1 hour) with respect to the concentrations of the buffer solutions. Figs. 11 and 12 show that, in the cases where the buffer solutions containing the compounds including an imidazole ring were used, high current densities were generally achieved compared with the cases where other buffer solutions such as the buffer solution containing NaH₂PO₄; and, in particular, this tendency becomes prominent as the concentration of the buffer solutions increases. In addition, Figs. 11 and 12 show that high current densities were also achieved in the case of using the buffer solutions containing, as buffer materials, 2-aminoethanol, triethanolamine, TES, and BES; and, in particular, this tendency becomes prominent as the concentration of the buffer solutions increases.

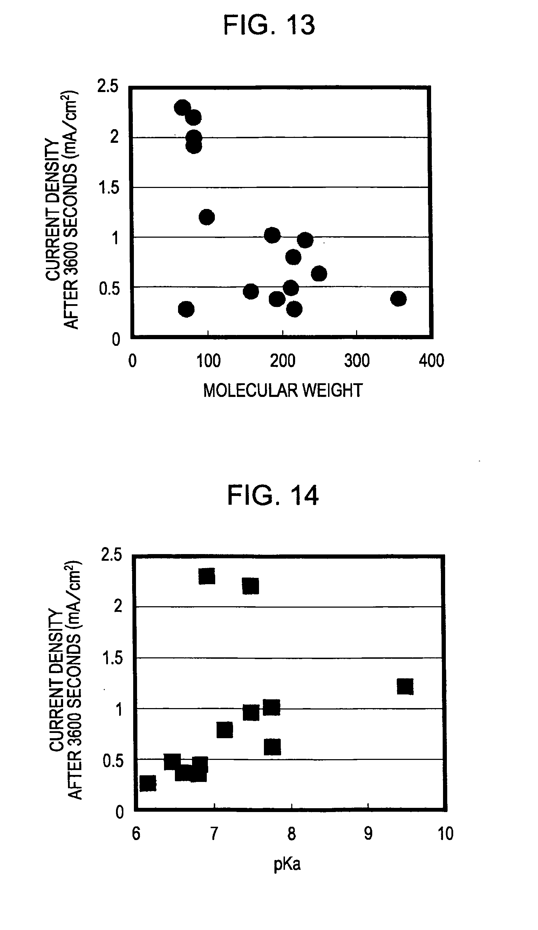

Figs. 13 and 14 illustrate graphs in which the current densities after 3600 seconds in the case of using the buffer solutions illustrated in Figs. 11 and 12 are plotted relative to the molecular weight and pKₐ of the buffer materials.

Hereinafter, an example of results of an experiment will be described in which the activities of BOD were compared in the case of using, as buffer solutions, a 2.0 M imidazole/hydrochloric acid aqueous solution (a solution in which 2.0 M imidazole had been neutralized with hydrochloric acid to pH 7.0) (2.0 M imidazole/hydrochloric acid buffer solution), a 2.0 M imidazole/acetic acid aqueous solution (a solution in which 2.0 M imidazole had been neutralized with acetic acid to pH 7.0) (2.0 M imidazole/acetic acid buffer solution), a 2.0 M imidazole/phosphoric acid aqueous solution (a solution in which 2.0 M imidazole had been neutralized with phosphoric acid to pH 7.0) (2.0 M imidazole/phosphoric acid buffer solution), and a 2.0 M imidazole/sulfuric acid aqueous solution (a solution in which 2.0 M imidazole had been neutralized with sulfuric acid to pH 7.0) (2.0 M imidazole/sulfuric acid buffer solution).

The activity of BOD was measured by using ABTS (2,2'-Azino-bis(3-ethylbenzothiazoline-6-sulfonic acid)diammonium salt) as a substrate and tracking change (derived from an increase in the reactant of ABTS) in the absorbance of light having a wavelength of 730 nm in the process of the reaction. The measurement conditions are shown in Table 3. Note that the concentration of BOD was adjusted upon the measurement of the activity such that change in the absorbance of light having a wavelength of 730 nm was about 0.01 to 0.2 per minute. The reaction was initiated by adding enzyme solutions (5 to 20 µL) to the various buffer solutions (2980 to 2995 µL) containing ABTS in Table 3.

**[Table 3]**

| | |
|---|---|
| Buffer solutions | 2.0 M imidazole/hydrochloric acid aqueous solution (pH 7.0) |
| | 2.0 M imidazole/acetic acid aqueous solution (pH 7.0) |
| | 2.0 M imidazole/phosphoric acid aqueous solution (pH 7.0) |
| | 2.0 M imidazole/sulfuric acid aqueous solution (p H 7.0) |
| A BTS concentration | 2 mM (final concentration) |
| O₂ concentration | Air saturated (210 µM; 25°C) |
| Reaction temperature | 25°C |

The measurement results of the enzyme activity are shown in Table 4 as relative activity values with respect to the activity in the 2.0 M imidazole/hydrochloric acid aqueous solution (pH 7.0) being defined as 1.0.

**[Table 4]**

| Type of buffer solutions | Relative activity values |
|---|---|
| 2.0 M imidazole/hydrochloric acid aqueous solution (pH 7.0) | 1.0 |
| 2.0 M imidazole/acetic acid aqueous solution (pH 7.0) | 2.1 |
| 2.0 M imidazole/phosphoric acid aqueous solution (pH 7.0) | 3.7 |
| 2.0 M imidazole/sulfuric acid aqueous solution (p H 7.0) | 11.2 |

Table 4 shows that the enzyme activities in the case of using the imidazole/acetic acid aqueous solution, the imidazole/phosphoric acid aqueous solution, and the imidazole/sulfuric acid aqueous solution were higher than the enzyme activity in the case of using the imidazole/hydrochloric acid aqueous solution; and, in particular, the enzyme activity in the case of using the imidazole/sulfuric acid aqueous solution was prominently high.

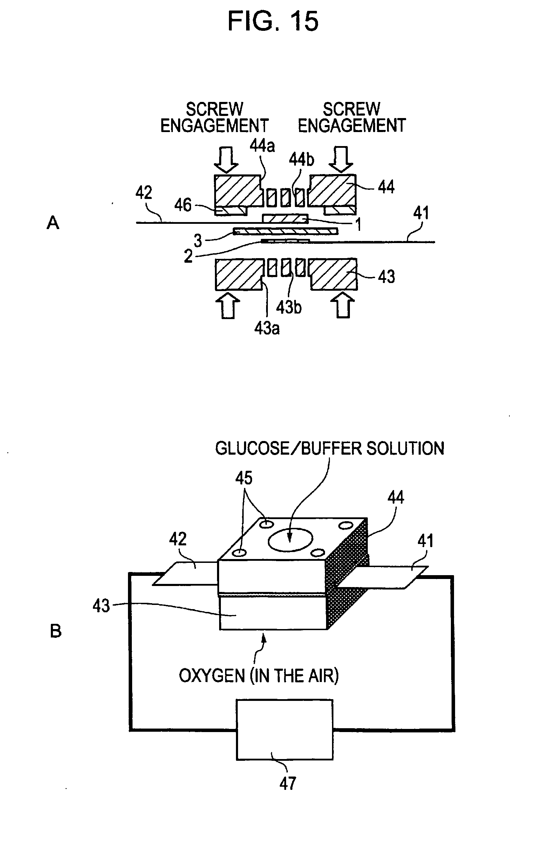

A specific configuration example of the biofuel cell is illustrated in Fig. 15A and 15B.

As illustrated in Fig. 15A and 15B, the biofuel cell has a configuration in which the negative electrode 1 constituted by an enzyme/electron mediator immobilized carbon electrode in which the above-described enzyme and electron mediator are immobilized on 1 cm² carbon felt with an immobilization material and the positive electrode 2 constituted by an enzyme/electron mediator immobilized carbon electrode in which the above-described enzyme and electron mediator are immobilized on 1 cm² carbon felt with an immobilization material face each other with the electrolyte layer 3 therebetween, the electrolyte layer 3 containing, as a buffer material, a compound including an imidazole ring or 2-aminoethanol hydrochloride. In this case, Ti collectors 41 and 42 are respectively disposed under the positive electrode 2 and on the negative electrode 1 so that current collection can be readily performed. Reference numerals 43 and 44 denote clamping plates. These clamping plates 43 and 44 are engaged with each other through screws 45 and the entirety of the positive electrode 2, the negative electrode 1, the electrolyte layer 3, and the Ti collectors 41 and 42 is sandwiched therebetween. A circular recess 43a for introducing air is provided on a surface (outer surface) of the clamping plate 43. Multiple holes 43b are provided so as to extend from the bottom surface of the recess 43a to the other surface. The holes 43b serve as air supply channels for the positive electrode 2. On the other hand, a circular recess 44a for introducing fuel is provided on a surface (outer surface) of the clamping plate 44. Multiple holes 44b are provided so as to extend from the bottom surface of the recess 44a to the other surface. The holes 44b serve as fuel supply channels for the negative electrode 1. A spacer 46 is provided in the peripheral portion of the other surface of the clamping plate 44 such that the spacing between the clamping plates 43 and 44 becomes a predetermined spacing after the engagement of the clamping plates 43 and 44 with each other through the screws 45.

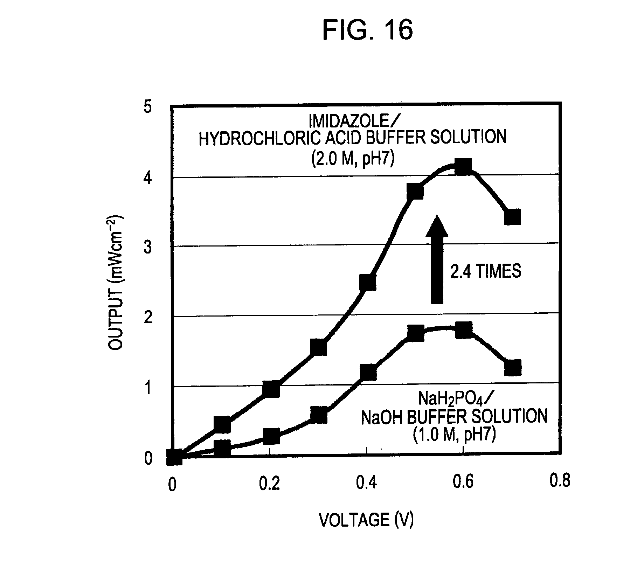

As illustrated in Fig. 15B, a load 47 was connected between the Ti collectors 41 and 42; a glucose/buffer solution was introduced as the fuel into the recess 44a of the clamping plate 44; and electric power was generated. As the buffer solution, two types of a 2.0 M imidazole/hydrochloric acid buffer solution (pH 7) and a 1.0 M NaH₂PO₄/NaOH buffer solution (pH 7) were used. The concentration of glucose was made at 0.4 M. The operation temperature was set at 25°C. The output characteristic is illustrated in Fig. 16. As illustrated in Fig. 16, the output (power density) in the case of using the 2.0 M imidazole/hydrochloric acid buffer solution as the buffer solution is about 2.4 times higher than that in the case of using the NaH₂PO₄/NaOH buffer solution.

In summary, according to the first embodiment, since the electrolyte layer 3 contains a compound including an imidazole ring as a buffer material, a sufficient buffering capability can be provided. Accordingly, even when an increase or a decrease in protons occurs within a proton electrode or an enzyme-immobilized membrane due to an enzyme reaction through protons in a high power output operation of a biofuel cell, a sufficient buffering capability can be provided and deviation of the pH of the electrolyte around the enzyme from the optimum pH can be sufficiently suppressed to a small degree. Furthermore, in addition to the compound including an imidazole ring, by adding at least one acid selected from the group consisting of acetic acid, phosphoric acid, and sulfuric acid, the activity of the enzyme can be maintained at a higher level. Thus, the inherent capability of the enzyme can be sufficiently exerted and electrode reactions relating to the enzyme, a coenzyme, an electron mediator, and the like can be efficiently and steadily performed. As a result, a high-performance biofuel cell that can be operated at a high output can be provided. Such a biofuel cell is suitably applied to the power supplies of various electronic apparatuses, mobile units, electric-power generating systems, and the like.

Hereinafter, a biofuel cell according to a second embodiment of the present invention will be described.

In this biofuel cell, the electrolyte layer 3 has a charge represented by the same sign as that of the charge of the oxidized form or the reduced form of an electron mediator used in the positive electrode 2 and the negative electrode 1. For example, at least a positive electrode 2 side surface of the electrolyte layer 3 is negatively charged and has a negative charge. Specifically, for example, at least the entirety or a part of a positive electrode 2 side portion of the electrolyte layer 3 includes a polyanion, which has a negative charge. As the polyanion, Nafion (trade name, E. I. du Pont de Nemours and Company in the United States), which is an ion-exchange resin including fluorine-containing carbon sulfonic acid groups, is preferably used.

Here, the results of a comparison experiment will be described, the comparison experiment being performed to demonstrate that, when the electrolyte layer 3 has a charge represented by the same sign as that of the charge of the oxidized form or the reduced form of an electron mediator, the oxidized form or the reduced form of the electron mediator can be prevented from passing through the electrolyte layer 3.

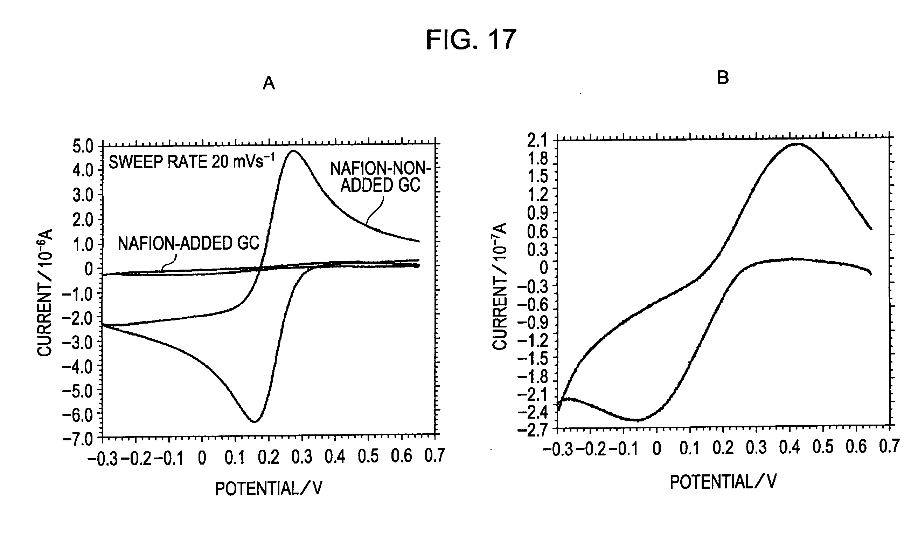

First, two commercially available glassy carbon (GC) electrodes (diameter: 3 mm) were prepared, and both of them were polished and washed. Then, 5 µl of an emulsion (20%) of commercially available Nafion, which is a polyanion, was added to one of the glassy carbon electrodes and dried. Then, the two glassy carbon electrodes were immersed in a 1 mM aqueous solution of hexacyanoferrate ions (multivalent anion) (50 mM NaH₂PO₄/NaOH buffer solution, pH 7) and subjected to cyclic voltammetry (CV) at a sweep rate of 20 mVs⁻¹. The results are illustrated in Fig. 17A. Fig. 17B illustrates enlarged CV curves in the case of using the Nafion-added glassy carbon electrode in Fig. 17A. Fig. 17A and 17B shows that oxidation-reduction peak current originated from hexacyanoferrate ions serving as an electron mediator in the Nafion-added glassy carbon electrode was 1/20 or less of that in the Nafion-non-added glassy carbon electrode. This shows that, in Nafion, which is a polyanion having a negative charge, hexacyanoferrate ions, which are multivalent anions having a negative charge as with Nafion, do not diffuse or permeate.

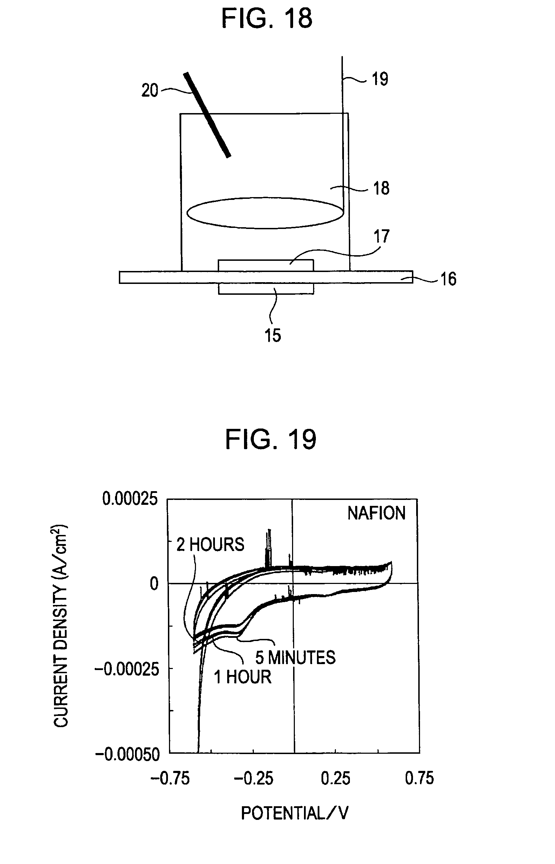

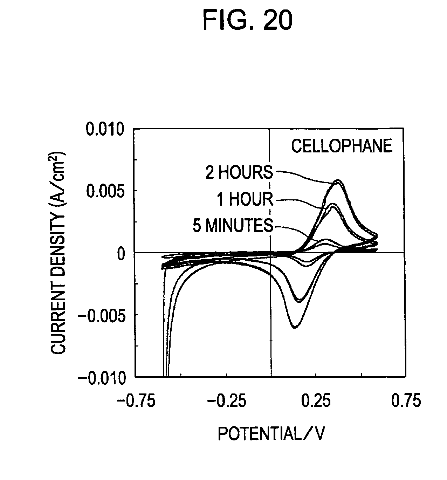

Then, a commercially available carbon felt (B0050 manufactured by TORAY) was used as porous carbon and squares of 1 cm per side were cut from the carbon felt. The carbon felts were impregnated with 80 µl of hexacyanoferrate ions (1 M) and dried. Two sheets of the thus-prepared electrodes were stacked to provide an experimental electrode. As illustrated in Fig. 18, a film-shaped separator 16 (corresponding to the electrolyte layer 3) was placed on the experimental electrode 15 and an active electrode 17 was provided so as to face the experimental electrode 15 with the separator 16 therebetween. As the active electrode 17, a square of 1 cm per side cut from a commercially available carbon felt (B0050 manufactured by TORAY) was used. Then, the separator 16 and the active electrode 17 were brought into contact with a buffer solution 18 composed of a 0.4 M NaH₂PO₄/NaOH (pH 7) in which hexacyanoferrate ions serving as an electron mediator had been dissolved (a container containing the buffer solution 18 is not shown). As the separator 16, a cellophane having no charge and Nafion (pH 7), which is a polyanion having a negative charge, were used. Cyclic voltammetry was performed when 5 minutes, 1 hour, and 2 hours had elapsed from the contact of the separator 16 with the buffer solution 18 (electrolytic solution) in which hexacyanoferrate ions had been dissolved and comparison of oxidation-reduction peak values of an electron mediator, that is, hexacyanoferrate ions, having passed from the experimental electrode 15 through the separator 16 was performed. A counter electrode 19 and a reference electrode 20 were immersed in the buffer solution 18 and an electrochemical measurement device (not shown) was connected to the active electrode 17, the counter electrode 19, and the reference electrode 20. As the counter electrode 19, a Pt wire was used. As the reference electrode 20, Ag|AgCl was used. The measurement was performed at the atmospheric pressure. The measurement temperature was 25°C. The measurement results in the case of using Nafion as the separator 16 are illustrated in Fig. 19. In addition, the measurement results in the case of using cellophane as the separator 16 are illustrated in Fig. 20. Figs. 19 and 20 show that, in the case of using cellophane as the separator 16, the oxidation-reduction peak of hexacyanoferrate ions was observed after as early as 5 minutes had elapsed from the initiation of the measurement and the oxidation-reduction peak value increased as the time elapsed; in contrast, in the case of using Nafion as the separator 16, the oxidation-reduction peak of hexacyanoferrate ions was not observed even after 2 hours had elapsed from the initiation of the measurement. Thus, it has been confirmed that, in the case of using cellophane as the separator 16, hexacyanoferrate ions pass through the separator 16; whereas, in the case of using Nafion as the separator 16, hexacyanoferrate ions do not pass through the separator 16.

According to the second embodiment, in addition to advantages similar to those in the first embodiment, the following advantage can be provided. That is, since the electrolyte layer 3 has a charge represented by the same sign as that of the charge of the oxidized form or the reduced form of an electron mediator used in the positive electrode 2 and the negative electrode 1, migration of the electron mediator in one of the positive electrode 2 and the negative electrode 1 through the electrolyte layer 3 to the other one of the positive electrode 2 and the negative electrode 1 can be effectively suppressed. Therefore, a decrease in the output and a decrease in the capacitance of the biofuel cell can be sufficiently suppressed.

Hereinafter, a biofuel cell according to a third embodiment of the present invention will be described.

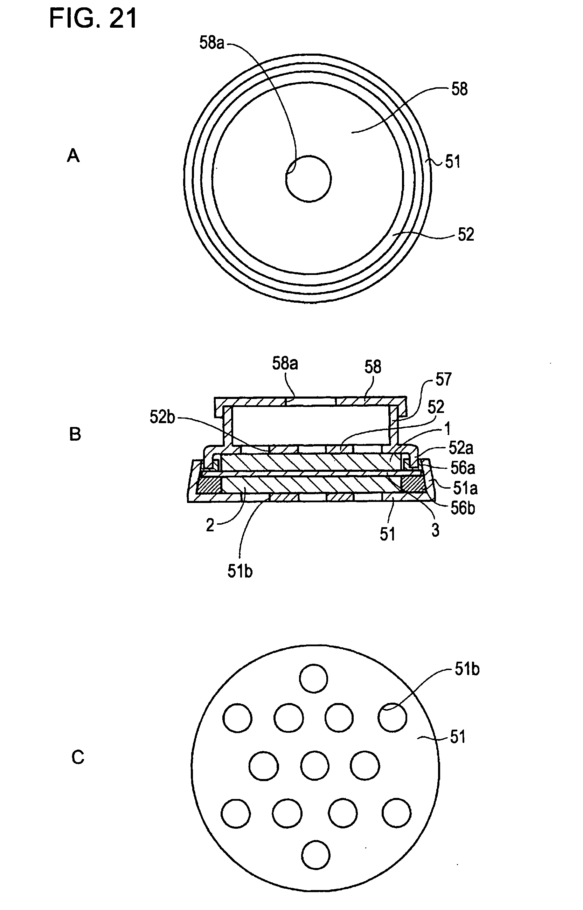

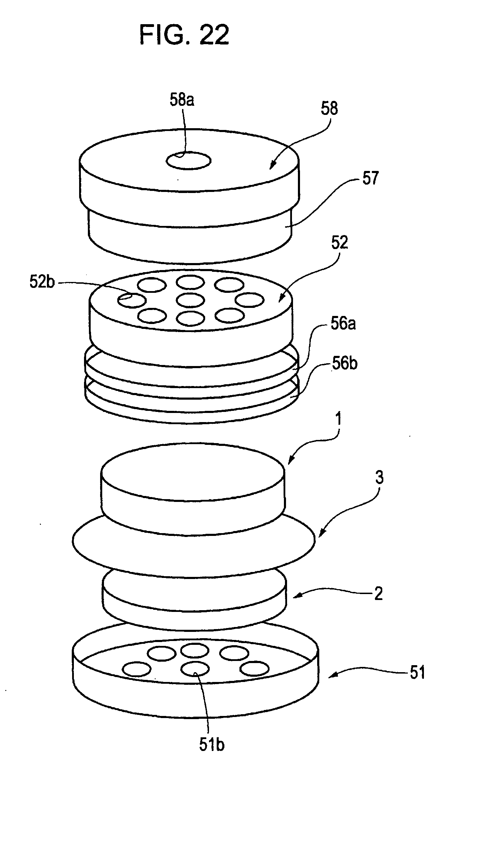

Fig. 21A, 21B, and 21C and Fig. 22 illustrate this biofuel cell. Fig. 21A, 21B, and 21C is a top view, a sectional view, and a back view of the biofuel cell. Fig. 22 is an exploded perspective view illustrating disassembled components of the biofuel cell.

As illustrated in Fig. 21A, 21B, and 21C and Fig. 22, in the biofuel cell, within the space formed between a positive electrode collector 51 and a negative electrode collector 52, the positive electrode 2, the electrolyte layer 3, and the negative electrode 1 are contained so as to be sandwiched from the top and the bottom by the positive electrode collector 51 and the negative electrode collector 52. The neighboring components among the positive electrode collector 51, the negative electrode collector 52, the positive electrode 2, the electrolyte layer 3, and the negative electrode 1 are in close contact with each other. In this case, the positive electrode collector 51, the negative electrode collector 52, the positive electrode 2, the electrolyte layer 3, and the negative electrode 1 have a circular planar shape and the entirety of the biofuel cell also has a circular planar shape.

The positive electrode collector 51 is configured to collect current generated in the positive electrode 2 and the current is extracted through the positive electrode collector 51 to the outside. In addition, the negative electrode collector 52 is configured to collect current generated in the negative electrode 1. In general, the positive electrode collector 51 and the negative electrode collector 52 are formed of a metal, an alloy, or the like; however, this is not limitative. The positive electrode collector 51 has a flat and substantially cylindrical shape. The negative electrode collector 52 also has a flat and substantially cylindrical shape. Then, the space containing the positive electrode 2, the electrolyte layer 3, and the negative electrode 1 is formed by swaging the edge of a circumferential portion 51a of the positive electrode collector 51 to a circumferential portion 52a of the negative electrode collector 52 with a ring-shaped gasket 56a composed of an insulating material such as silicone rubber and a ring-shaped hydrophobic resin 56b such as polytetrafluoroethylene (PTFE) therebetween. The hydrophobic resin 56b is disposed in the space surrounded by the positive electrode 2, the positive electrode collector 51, and the gasket 56a so as to be in close contact with the positive electrode 2, the positive electrode collector 51, and the gasket 56a. The hydrophobic resin 56b effectively suppresses excessive permeation of the fuel into the positive electrode 2 side. The end portions of the electrolyte layer 3 extend to the outside of the positive electrode 2 and the negative electrode 1 and is sandwiched between the gasket 56a and the hydrophobic resin 56b. The positive electrode collector 51 includes a plurality of oxidizing agent supply ports 51b over the entire bottom surface thereof. The positive electrode 2 is exposed through the inside of the oxidizing agent supply ports 51b. Figs. 21C and 22 illustrate 13 circular oxidizing agent supply ports 51b. However, this is a mere example and the number, shape, size, and arrangement of the oxidizing agent supply ports 51b may be appropriately selected. The negative electrode collector 52 also includes a plurality of fuel supply ports 52b over the entire top surface thereof. The negative electrode 1 is exposed through the inside of the fuel supply ports 52b. Fig. 22 illustrates 9 circular fuel supply ports 52b. However, this is a mere example and the number, shape, size, and arrangement of the fuel supply ports 52b may be appropriately selected.

The negative electrode collector 52 includes a cylindrical fuel tank 57 on a surface opposite the negative electrode 1.
The fuel tank 57 is integrally formed with the negative electrode collector 52. The fuel tank 57 is filled with fuel (not shown) to be used, for example, a glucose solution, a glucose solution to which an electrolyte has been further added, or the like. A cylindrical lid 58 is detachably attached to the fuel tank 57. The lid 58 is, for example, engaged with or screwed to the fuel tank 57. A circular fuel supply port 58a is formed in the central portion of the lid 58. This fuel supply port 58a is sealed by, for example, the application of a sealing sheet, which is not shown.

Configurations other than those described above in the biofuel cell are similar to those in the first embodiment as long as not being contrary to the nature of the biofuel cell.

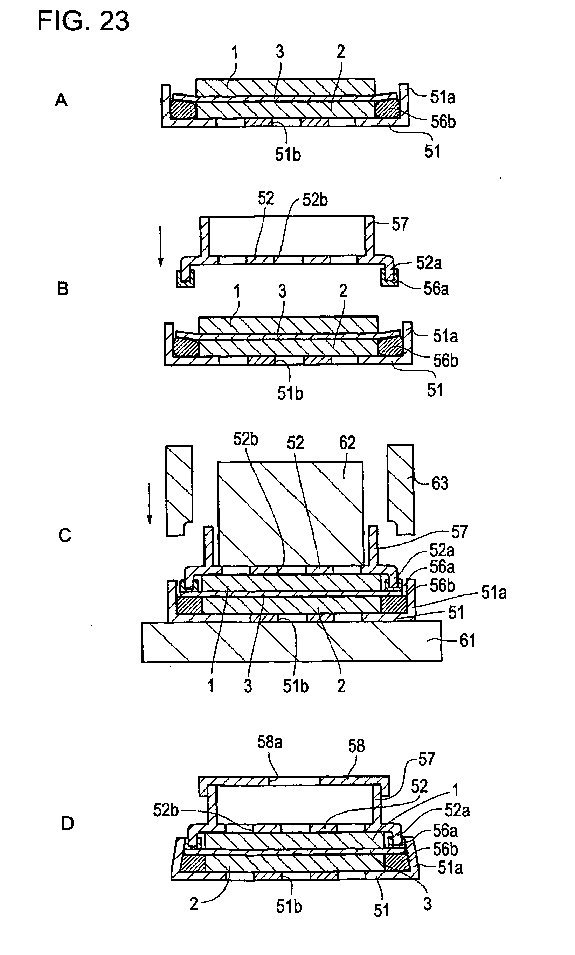

Hereinafter, an example of a method for producing the biofuel cell will be described. This production method is illustrated in Fig. 23A to 23D.

As illustrated in Fig. 23A, firstly, the cylindrical positive electrode collector 51 one end of which is open is prepared. The plurality of oxidizing agent supply ports 51b are formed over the entire bottom surface of the positive electrode collector 51. The ring-shaped hydrophobic resin 56b is placed in the circumferential portion of the internal bottom surface of the positive electrode collector 51. The positive electrode 2, the electrolyte layer 3, and the negative electrode 1 are sequentially stacked on the central portion of the bottom surface.

On the other hand, as illustrated in Fig. 23B, a component in which the cylindrical fuel tank 57 is integrally formed on the cylindrical negative electrode collector 52 one end of which is open is prepared. The plurality of fuel supply ports 52b are formed over the entire surface of the negative electrode collector 52. The gasket 56a having a U-shaped section is attached to the edge of the circumferential surface of the negative electrode collector 52. Then, the negative electrode collector 52 with the open side thereof being downward is put on the negative electrode 1 such that the positive electrode 2, the electrolyte layer 3, and the negative electrode 1 are sandwiched between the positive electrode collector 51 and the negative electrode collector 52.

Then, as illustrated in Fig. 23C, the resultant structure in which the positive electrode 2, the electrolyte layer 3, and the negative electrode 1 are sandwiched between the positive electrode collector 51 and the negative electrode collector 52 is placed on a stage 61 of a swaging apparatus. The negative electrode collector 52 is pressed with a pressing member 62 so that neighboring components among the positive electrode collector 51, the positive electrode 2, the electrolyte layer 3, the negative electrode 1, and the negative electrode collector 52 are closely in contact with each other. In this state, a swaging tool 63 is lowered so that the edge of the circumferential portion 51a of the positive electrode collector 51 is swaged to the circumferential portion 52a of the negative electrode collector 52 with the gasket 56a and the hydrophobic resin 56b therebetween. This swaging is performed such that the gasket 56a is gradually collapsed and no gaps remain between the positive electrode collector 51 and the gasket 56a and between the negative electrode collector 52 and the gasket 56a. In addition, at this time, the hydrophobic resin 56b is also gradually compressed so as to be in close contact with the positive electrode 2, the positive electrode collector 51, and the gasket 56a. As a result, while the positive electrode collector 51 and the negative electrode collector 52 are electrically insulated from each other by the gasket 56a, the space containing the positive electrode 2, the electrolyte layer 3, and the negative electrode 1 is formed therewithin. After that, the swaging tool 63 is lifted.

Thus, as illustrated in Fig. 23D, the biofuel cell in which the positive electrode 2, the electrolyte layer 3, and the negative electrode 1 are contained within the space formed between the positive electrode collector 51 and the negative electrode collector 52 is produced.

Then, the lid 58 is attached to the fuel tank 57. The fuel and the electrolyte are injected through the fuel supply port 58a of the lid 58. After that, the fuel supply port 58a is sealed by, for example, the application of a sealing sheet. Note that the fuel and the electrolyte may be injected into the fuel tank 57 in the step illustrated in Fig. 23B.

In the biofuel cell, when the fuel injected into the fuel tank 57 is, for example, a glucose solution, the negative electrode 1 decomposes the supplied glucose with an enzyme to extract electrons and to produce H⁺. The positive electrode 2 generates water from H⁺ having been transported from the negative electrode 1 through the electrolyte layer 3, electrons having been transported from the negative electrode 1 through an external circuit, and oxygen, for example, in the air. Thus, an output voltage is provided between the positive electrode collector 51 and the negative electrode collector 52.

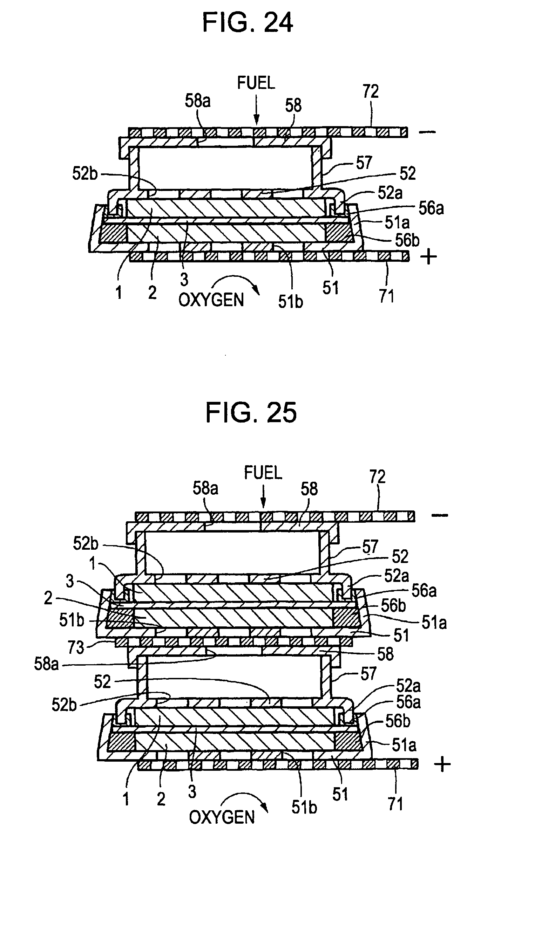

As illustrated in Fig. 24, mesh electrodes 71 and 72 may be respectively formed for the positive electrode collector 51 and the negative electrode collector 52 of the biofuel cell. In this case, the outside air passes through the holes of the mesh electrode 71 to the oxidizing agent supply ports 51b of the positive electrode collector 51; and the fuel passes through the holes of the mesh electrode 72 and the fuel supply port 58a of the lid 58 to the fuel tank 57.

Fig. 25 illustrates a case where two biofuel cells are connected in series. In this case, a mesh electrode 73 is disposed between the positive electrode collector 51 of one biofuel cell (the upper biofuel cell in the figure) and the lid 58 of the other biofuel cell (the lower biofuel cell in the figure). In this case, the outside air passes through the holes of the mesh electrode 73 to the oxidizing agent supply ports 51b of the positive electrode collector 51. The fuel may be supplied with a fuel supply system.

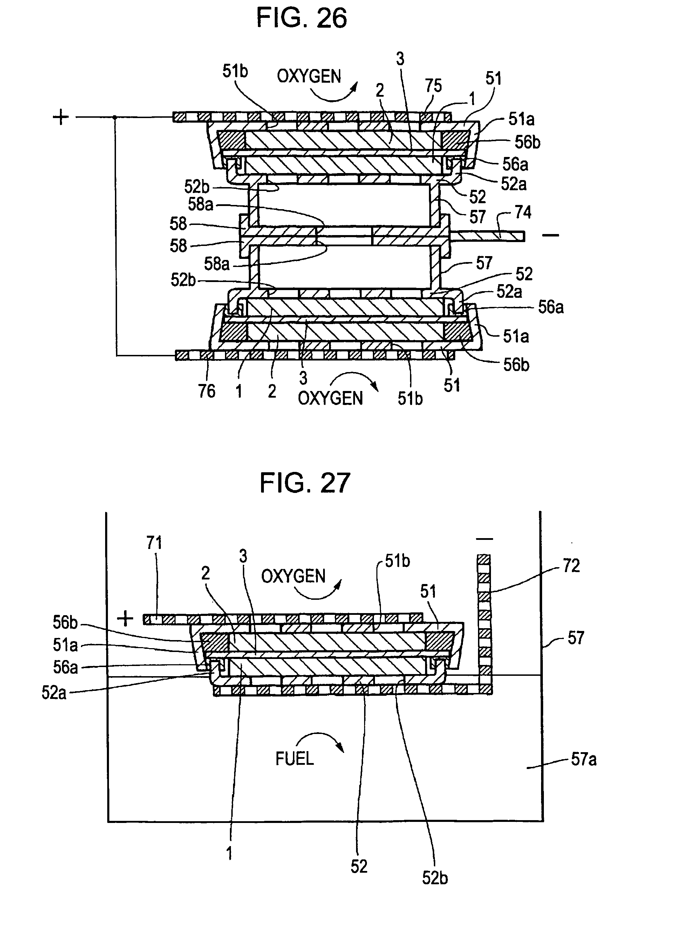

Fig. 26 illustrates a case where two biofuel cells are connected in parallel. In this case, the fuel tank 57 of one biofuel cell (the upper biofuel cell in the figure) and the fuel tank 57 of the other biofuel cell (the lower biofuel cell in the figure) are brought into contact with each other such that the fuel supply ports 58a of the lids 58 thereof correspond to each other. An electrode 74 is made to extend from the side surfaces of the fuel tanks 57. In addition, mesh electrodes 75 and 76 are respectively formed for the positive electrode collector 51 of the one biofuel cell and the positive electrode collector 51 of the other biofuel cell. These mesh electrodes 75 and 76 are connected to each other. The outside air passes through the holes of the mesh electrodes 75 and 76 to the oxidizing agent supply ports 51b of the positive electrode collectors 51.

According to the third embodiment, in a biofuel cell that has the shape of a coin or a button except for the fuel tank 57, advantages similar to those in the first embodiment can be provided. In addition, in this biofuel cell, the positive electrode 2, the electrolyte layer 3, and the negative electrode 1 are sandwiched between the positive electrode collector 51 and the negative electrode collector 52 and the edge of the circumferential portion 51a of the positive electrode collector 51 is swaged to the circumferential portion 52a of the negative electrode collector 52 with the gasket 56 therebetween. As a result, in the biofuel cell, the components can be made uniformly in close contact with each other and hence variation in the output can be prevented and leakage of cell solutions such as fuel and an electrolyte from the interfaces between the components can also be prevented. In addition, the production process of the biofuel cell is simple. Furthermore, the size of the biofuel cell can be readily decreased. In addition, in the biofuel cell, by using a glucose solution or starch as the fuel and selecting the pH of the electrolyte used to be about 7 (neutral), unlikely leakage of the fuel or the electrolyte to the outside does not affect the safety.

In addition, contrary to air cells being practically used in which the addition of the fuel and the electrolyte needs to be performed upon production and it is difficult to perform the addition after the production, in the biofuel cells, the addition of the fuel and the electrolyte can be performed after the production. Accordingly, compared with air cells being practically used, the biofuel cells are readily produced.

Hereinafter, a biofuel cell according to a fourth embodiment of the present invention will be described.

As illustrated in Fig. 27, in the fourth embodiment, a biofuel cell is used in which the fuel tank 57 integrally formed with the negative electrode collector 52 is removed from the biofuel cell according to the third embodiment; and the mesh electrodes 71 and 72 are further respectively formed for the positive electrode collector 51 and the negative electrode collector 52. The biofuel cell is used in the state of being floated on fuel 57a in the open-system fuel tank 57 such that the negative electrode 1 side of the biofuel cell is downside and the positive electrode 2 side is upside.

Features of the fourth embodiment other than those described above are similar to those in the first and third embodiments as long as not being contrary to the nature.

According to the fourth embodiment, advantages similar to those in the first and third embodiments can be provided.

Hereinafter, a biofuel cell according to a fifth embodiment of the present invention will be described. Contrary to a biofuel cell according to the third embodiment having the shape of a coin or a button, the biofuel cell has the shape of a cylinder.

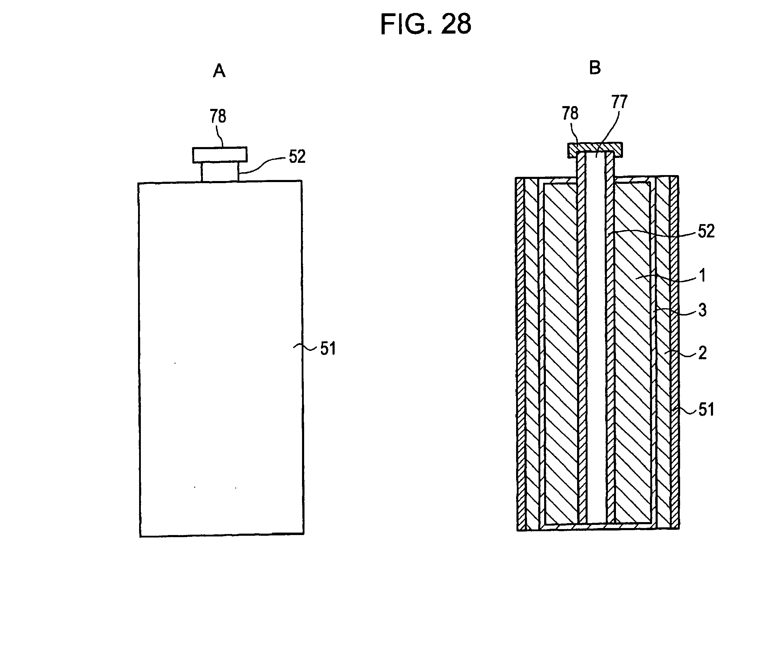

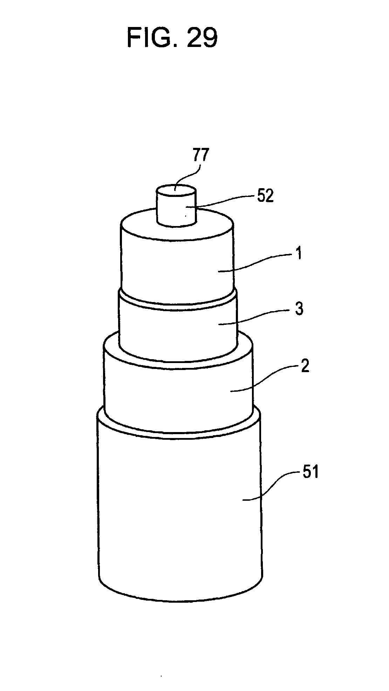

Fig. 28A and 28B and Fig. 29 illustrate this biofuel cell. Fig. 28A is a front view of the biofuel cell. Fig. 28B is a longitudinal sectional view of the biofuel cell. Fig. 29 is an exploded perspective view illustrating disassembled components of the biofuel cell.

As illustrated in Fig. 28A and 28B and Fig. 29, in the biofuel cell, the negative electrode collector 52, the negative electrode 1, the electrolyte layer 3, the positive electrode 2, and the positive electrode collector 51 that are tubular are sequentially provided around a cylindrical fuel storage section 77. In this case, the fuel storage section 77 is constituted by the space surrounded by the tubular negative electrode collector 52. An end of the fuel storage section 77 extends to the outside and the end is equipped with a lid 78. Although not being shown in the figure, the plurality of fuel supply ports 52b are formed over the entire surface of the negative electrode collector 52 around the fuel storage section 77. In addition, the electrolyte layer 3 has the shape of a bag enveloping the negative electrode 1 and the negative electrode collector 52. The portion between the electrolyte layer 3 and the negative electrode collector 52 in one end of the fuel storage section 77 is sealed with, for example, a sealing member (not shown) or the like, such that the fuel does not leak from the portion to the outside.

In the biofuel cell, the fuel and the electrolyte are injected into the fuel storage section 77. The fuel and the electrolyte pass through the fuel supply ports 52b of the negative electrode collector 52 to the negative electrode 1 and permeate through the porous portion of the negative electrode 1 to thereby be stored within the negative electrode 1. To increase the amount of the fuel stored within the negative electrode 1, the porosity of the negative electrode 1 is desirably, for example, 60% or more; however, this is not limitative.

In the biofuel cell, to enhance the durability, a gas liquid separation layer may be formed around the circumference of the positive electrode collector 51. As a material of the gas liquid separation layer, for example, a waterproof moisture-permeable material (a material complex of a stretched film of polytetrafluoroethylene and a polyurethane polymer) (for example, GORE-TEX (trade name) manufactured by W. L. Gore & Associates, Inc.) is used. To bring the components of the biofuel cell into close contact with each other uniformly, an elastic rubber (in the form of a band or a sheet) having a networked structure through which the air can permeate from the outside may be preferably wound the outside or inside of the gas liquid separation layer such that the entirety of components of the biofuel cell is fastened.

Features of the fifth embodiment other than those described above are similar to those in the first and third embodiments as long as not being contrary to the nature.

According to the fifth embodiment, advantages similar to those in the first and third embodiments can be provided.

Hereinafter, a biofuel cell according to a sixth embodiment of the present invention will be described.

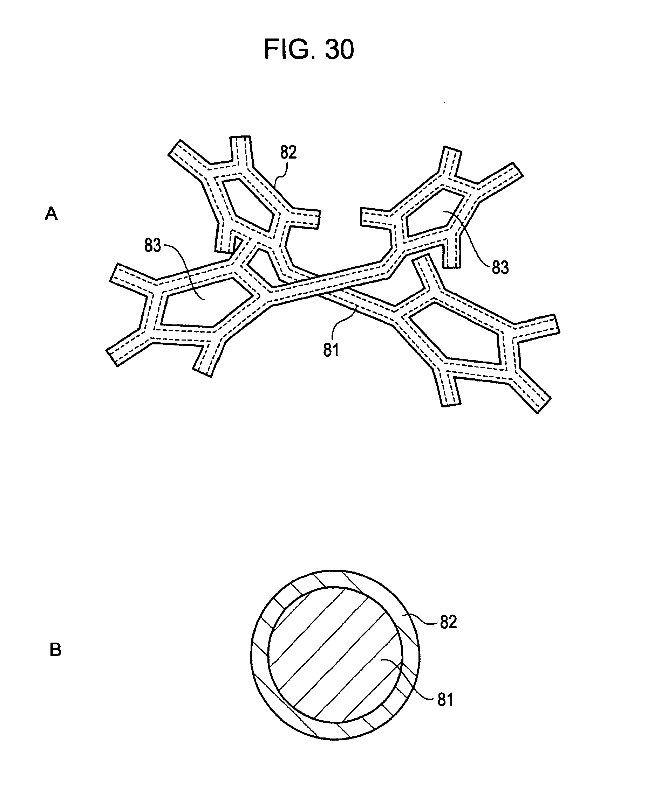

The biofuel cell according to the sixth embodiment has a configuration similar to that of the biofuel cell according to the first embodiment except that a porous conductive material illustrated in Fig. 30A and 30B is used as a material of the electrode 11 of the negative electrode 1.

Fig. 30A schematically illustrates the structure of the porous conductive material. Fig. 30B is a sectional view of a structural portion of the porous conductive material. As illustrated in Fig. 30A and 30B, the porous conductive material is constituted by a structure 81 composed of a porous material having a three-dimensional networked structure and a carbon-based material 82 covering the surface of the structure 81. The porous conductive material has a three-dimensional networked structure in which multiple pores 83 surrounded by the carbon-based material 82 correspond to the pores of the network. In this case, the pores 83 are in communication with each other. The carbon-based material 82 may have any shape: a fibrous shape (acicular shape), a granular shape, or the like.

As the structure 81 composed of a porous material, a foam metal or a foam alloy, for example, foam nickel is used. The porosity of the structure 81 is generally 85% or more, more generally, 90% or more. The pore size of the structure 81 is generally, for example, 10 nm to 1 mm, more generally 10 nm to 600 µm, still more generally 1 to 600 µm, typically 50 to 300 µm, and more typically 100 to 250 µm. As the carbon-based material 82, a material having a high conductivity such as Ketjenblack is preferred; however, a high-performance carbon material such as carbon nanotubes or fullerene may be used.

The porosity of the porous conductive material is generally 80% or more, more generally 90% or more. The size of the pores 83 is generally, for example, 9 nm to 1 mm, more generally 9 nm to 600 µm, still more generally 1 to 600 µm, typically 30 to 400 µm, and more typically 80 to 230 µm.

Hereinafter, a method for producing the porous conductive material will be described.

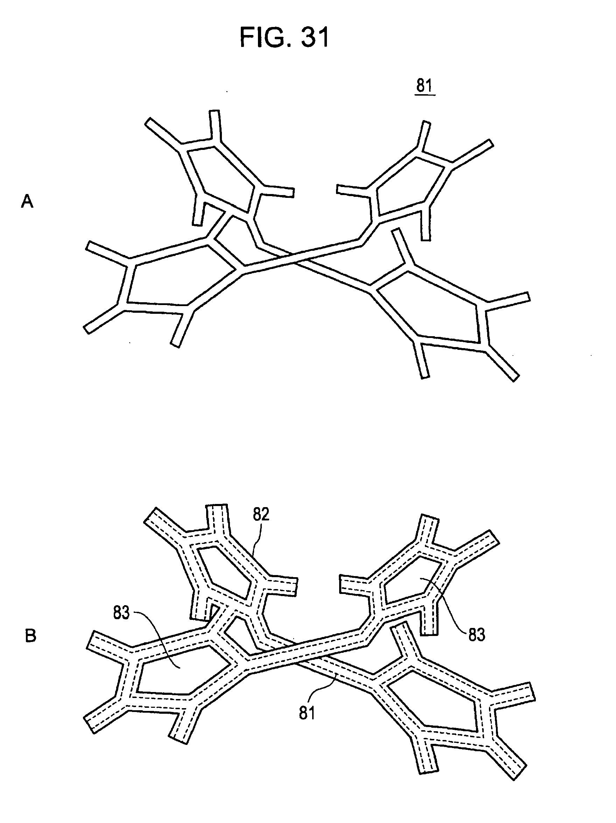

As illustrated in Fig. 31A, firstly, the structure 81 composed of a foam metal or a foam alloy (for example, foam nickel) is prepared.

Then, as illustrated in Fig. 31B, the surface of the structure 81 composed of a foam metal or a foam alloy is coated with the carbon-based material 82. As the coating method, a conventionally known method can be employed. For example, the coating of the carbon-based material 82 is formed by spraying an emulsion containing carbon powder, an appropriate binder, and the like onto the surface of the structure 81 with a spray. The thickness of the coating of the carbon-based material 82 is determined in accordance with a porosity and a pore size that are required for the porous conductive material in consideration of the porosity and the pore size of the structure 81 composed of a foam metal or a foam alloy. When the coating is performed, the multiple pores 83 surrounded by the carbon-based material 82 are made to be in communication with each other.

Thus, the intended porous conductive material is produced.

According to the sixth embodiment, as for the porous conductive material in which the surface of the structure 81 composed of a foam metal or a foam alloy is coated with the carbon-based material 82, the size of the pores 83 is sufficiently large; and the porous conductive material has a coarse three-dimensional networked structure, a high strength, and a high conductivity, and can have a necessary and sufficient surface area. Accordingly, as for the negative electrode 1 in which an electrode 81 is formed of the porous conductive material and an enzyme, a coenzyme, an electron mediator, and the like are immobilized in the electrode 81, enzyme metabolic reactions can be efficiently performed on the negative electrode 1 or enzyme reaction phenomena occurring near the electrode 11 can be efficiently captured as electric signals; and, in addition, the negative electrode 1 is stable irrespective of usage environments. Thus, a high-performance biofuel cell can be achieved.

Hereinafter, a biofuel cell according to a seventh embodiment of the present invention will be described.

In this biofuel cell, starch, which is a polysaccharide, is used as the fuel. In addition, since starch is used as the fuel, glucoamylase, which is a catabolic enzyme that decomposes starch into glucose, is also immobilized in the negative electrode 1.

In the biofuel cell, when starch is supplied as the fuel to the negative electrode 1 side, the starch is hydrolyzed by glucoamylase into glucose. The glucose is further decomposed by glucose dehydrogenase. In the oxidation reaction of this decomposition process, NAD⁺ is reduced to produce NADH. The NADH is oxidized by diaphorase to be separated into two electrons, NAD⁺, and H⁺. Accordingly, two electrons and two H⁺ per glucose molecule are produced by a single step oxidation reaction. By a two step oxidation reaction, four electrons and four H⁺ are produced in total. The thus-produced electrons are given to the electrode 11 of the negative electrode 1 and H⁺ are moved through the electrolyte layer 3 to the positive electrode 2. In the positive electrode 2, the H⁺ react with oxygen supplied from the outside and electrons having been transported from the negative electrode 1 through an external circuit to thereby generate H₂O. Features other than those described above are similar to those of the biofuel cell according to the first embodiment.

According to the seventh embodiment, advantages similar to those in the first embodiment can be provided. In addition, since starch is used as the fuel, an advantage in that the amount of power generation can be increased can be provided compared with the case of using glucose as the fuel.

Embodiments according to the present invention have been specifically described so far. However, the present invention is not restricted to the above-described embodiments and various modifications can be made on the basis of the technical idea of the present invention.

For example, the values, structures, configurations, shapes, materials, and the like exemplified in the above-described embodiments are mere examples. If necessary, values, structures, configurations, shapes, materials, and the like that are different from these may be employed.

Incidentally, in conventional biofuel cells, the selection of an electron mediator performing electron transfer between an enzyme and an electrode considerably influences the output of cells. That is, there is a problem in that, when an electron mediator having a small free energy difference from a substrate is selected in order to achieve a high output voltage of a cell, a current value is not provided; in contrast, when an electron mediator having a large free energy difference from a substrate is selected, the current-carrying capacity becomes small. This problem can be overcome by simultaneously using two or more electron mediators having different oxidation-reduction potentials for the negative electrode 1 and/or the positive electrode 2 such that appropriate selection between both a high output voltage and a high current can be performed. In this case, the oxidation-reduction potentials of the two or more electron mediators are preferably different from each other, at pH 7.0, 50 mV or more, more preferably 100 mV or more, and still more preferably 200 mV or more. In this way, by simultaneously using two or more electron mediators immobilized in the negative electrode 1 or the positive electrode 2, a biofuel cell can be achieved in which, when a low output is required, the operation of the cell at a high potential with a low energy loss can be performed, and, when a high output is required, a high output can be endured with a high energy loss.

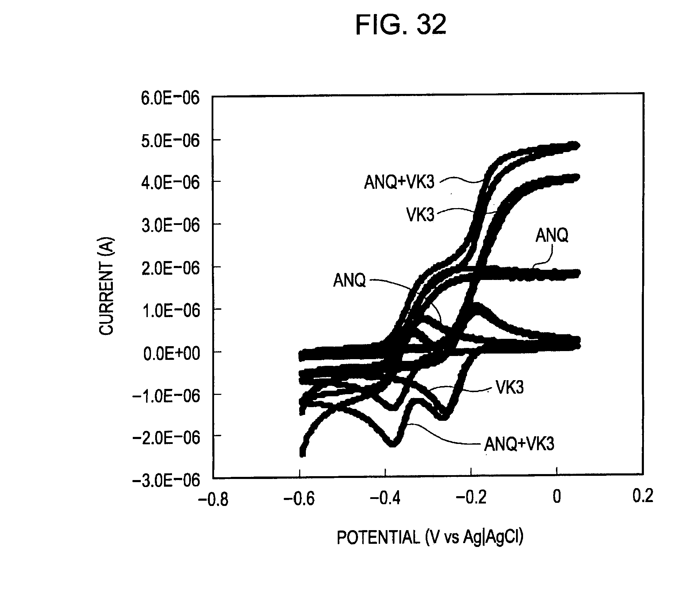

Fig. 32 illustrates the results of cyclic voltammetry performed such that 100 µM of VK3 (vitamin K3) only, 100 µM of ANQ only, and both 100 µM of VK3 and 100 µM of ANQ were added to a 0.1 M NaH₂PO₄/NaOH buffer solution (pH 7). The oxidation-reduction potentials of VK3 and ANQ at pH 7 are respectively - 0.22 V and -0.33 V (vs. Ag|AgCl) and the oxidation-reduction potentials of the two are different from each other by 0.11 V (110 mV). After that, the concentrations of the solutions were adjusted such that NADH was 5 mM and enzyme diaphorase was 0.16 µM and cyclic voltammetry was performed. The results are also illustrated in Fig. 32. Fig. 32 shows that, when VK3 and ANQ that have oxidation-reduction potentials different from each other by 110 mV at pH 7 were used as electron mediators, a high output voltage and a high output current value were achieved compared with the cases where VK3 and ANQ were individually used.

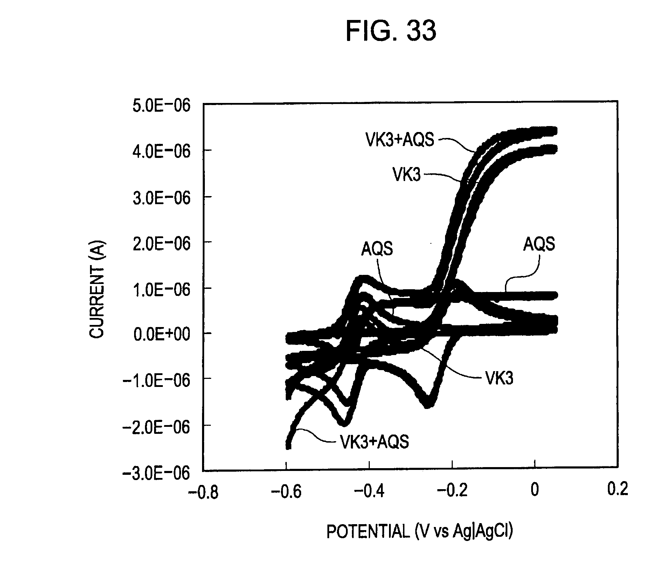

Fig. 33 illustrates the results of cyclic voltammetry performed such that 100 µM of VK3 only, 100 µM of AQS only, and both 100 µM of VK3 and 100 µM of AQS were added to a 0.1 M NaH₂PO₄/NaOH buffer solution (pH 7). The oxidation-reduction potentials of VK3 and AQS at pH 7 are respectively -0.22 V and - 0.42 V (vs. Ag|AgCl) and the oxidation-reduction potentials of the two are different from each other by 0.2 V (200 mV). After that, the concentrations of the solutions were adjusted such that NADH was 5 mM and enzyme diaphorase was 0.16 µM and cyclic voltammetry was performed. The results are also illustrated in Fig. 33. Fig. 33 shows that, when VK3 and AQS that have oxidation-reduction potentials different from each other by 200 mV at pH 7 were used as electron mediators, a high output voltage and a high output current value were achieved compared with the cases where VK3 and AQS were individually used.

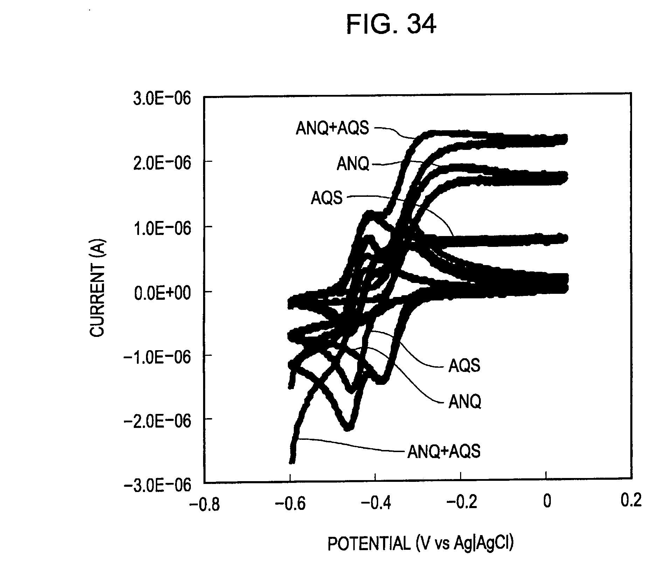

Fig. 34 illustrates the results of cyclic voltammetry performed such that 100 µM of ANQ only, 100 µM of AQS only, and both 100 µM of ANQ and 100 µM of AQS were added to a 0.1 M NaH₂PO₄/NaOH buffer solution (pH 7). The oxidation-reduction potentials of ANQ and AQS at pH 7 are respectively -0.33 V and - 0.42 V (vs. Ag|AgCl) and the oxidation-reduction potentials of the two are different from each other by 0.09 V (90 mV). After that, the concentrations of the solutions were adjusted such that NADH was 5 mM and enzyme diaphorase was 0.16 µM and cyclic voltammetry was performed. The results are also illustrated in Fig. 34. Fig. 34 shows that, when ANQ and AQS that have oxidation-reduction potentials different from each other by 90 mV at pH 7 were used as electron mediators, a high output voltage and a high output current value were achieved compared with the cases where ANQ and AQS were individually used.

Note that the use of two or more electron mediators having different oxidation-reduction potentials from each other as described above is effective not only in biofuel cells employing enzymes but also in the cases where electron mediators are used in biofuel cells employing microorganisms and biological cells and, more generally, the use is generally effective in electrode reaction employing devices employing electron mediators (biofuel cells, biosensors, bioreactors, and the like).

## Claims

1. A fuel cell including a structure in which a positive electrode and a negative electrode face each other with an electrolyte therebetween, the electrolyte containing a buffer material,
wherein an enzyme is immobilized in at least one of the positive electrode and the negative electrode; and
the buffer material contains a compound including an imidazole ring and at least one acid selected from the group consisting of acetic acid, phosphoric acid, and sulfuric acid is added to the buffer material.

2. The fuel cell according to Claim 1, wherein a concentration of the buffer material is 0.2 M or more and 2.5 M or less.

3. The fuel cell according to Claim 1, wherein the enzyme includes an oxygen reductase immobilized in the positive electrode.

4. The fuel cell according to Claim 3, wherein the oxygen reductase is bilirubin oxidase.

5. The fuel cell according to Claim 1, wherein, in addition to the enzyme, an electron mediator is immobilized in at least one of the positive electrode and the negative electrode.

6. The fuel cell according to Claim 1, wherein the enzyme includes an oxidase that is immobilized in the negative electrode and that promotes oxidation of a monosaccharide to decompose the monosaccharide.

7. The fuel cell according to Claim 6, wherein the enzyme includes a coenzyme oxidase that turns back a coenzyme having been reduced in the oxidation of a monosaccharide to an oxidized form and that gives an electron to the negative electrode through an electron mediator.

8. The fuel cell according to Claim 7, wherein the oxidized form of the coenzyme is NAD⁺ and the coenzyme oxidase is diaphorase.

9. The fuel cell according to Claim 6, wherein the oxidase is NAD⁺ dependent glucose dehydrogenase.

10. The fuel cell according to Claim 1, wherein the enzyme includes a catabolic enzyme and an oxidase that are immobilized in the negative electrode, the catabolic enzyme promoting decomposition of a polysaccharide to produce a monosaccharide, the oxidase promoting oxidation of the produced monosaccharide to decompose the monosaccharide.

11. The fuel cell according to Claim 10, wherein the catabolic enzyme is glucoamylase and the oxidase is NAD⁺ dependent glucose dehydrogenase.

12. An electronic apparatus comprising one or a plurality of fuel cells,
wherein at least one of the fuel cells
includes a structure in which a positive electrode and a negative electrode face each other with an electrolyte therebetween, the electrolyte containing a buffer material; an enzyme is immobilized in at least one of the positive electrode and the negative electrode; the buffer material contains a compound including an imidazole ring; and at least one acid selected from the group consisting of acetic acid, phosphoric acid, and sulfuric acid is added to the buffer material.
